(19) Europäisches Patentamt
European Patent Office
Office européen des brevets

(11) **EP 4 737 604 A1**

(12) **EUROPEAN PATENT APPLICATION**
published in accordance with Art. 153(4) EPC

(43) Date of publication:
06.05.2026 Bulletin 2026/19

(21) Application number: 24832024.4

(22) Date of filing: 27.06.2024

(51) International Patent Classification (IPC):
*C22C 38/00* (2006.01)    *C21D 8/12* (2026.01)
*C22C 38/60* (2006.01)

(52) Cooperative Patent Classification (CPC):
C21D 8/12; C22C 38/00; C22C 38/60; Y02P 10/20

(86) International application number:
PCT/JP2024/023278

(87) International publication number:
WO 2025/005165 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.06.2023 JP 2023106859

(71) Applicant: Nippon Steel Corporation
Tokyo 100-8071 (JP)

(72) Inventors:
• NAKAMURA, Shuichi
Tokyo 100-8071 (JP)
• HIROTA, Yoshiaki
Tokyo 100-8071 (JP)
• ATSUMI, Haruhiko
Tokyo 100-8071 (JP)

(74) Representative: Vossius & Partner
Patentanwälte Rechtsanwälte mbB
Siebertstraße 3
81675 München (DE)

(54) **DECARBURIZED ANNEALED STEEL SHEET FOR GRAIN-ORIENTED ELECTROMAGNETIC STEEL SHEET**

(57)    In a decarburization-annealed steel sheet for a grain oriented electrical steel sheet, an area fraction of a divided sub-domain group I in which a value of $F_C \div aveF_C$ is 1.3 or more in an area of a divided domain of at least 100 mm $\times$ 100 mm on a sheet surface is 0.05% or more and 50% or less, and a value obtained by dividing an area fraction of Goss-oriented grains included in the divided sub-domain group I in an area of the divided sub-domain group I by an area fraction of the Goss-oriented grains included in the divided domain in an area of the divided domain is 1.3 or more.

FIG. 2

EP 4 737 604 A1

**Description**

TECHNICAL FIELD

The present invention relates to a decarburization-annealed steel sheet for a grain oriented electrical steel sheet.
Priority is claimed on Japanese Patent Application No. 2023-106859, filed June 29, 2023, the content of which is incorporated herein by reference.

BACKGROUND ART

A grain oriented electrical steel sheet includes Si, the crystal orientation of the grains thereof closely aligns in the Goss orientation (cubic crystal {110}<001>), and the <001> orientation, which is a magnetization easy axis, is substantially aligned in the rolling direction in the steel sheet manufacturing process. Such a grain oriented electrical steel sheet is very desirable as a material for an iron core and the like of a transformer. Among the magnetic characteristics of the grain oriented electrical steel sheet, magnetic flux density and iron loss are particularly important.
The magnetic flux density of the grain oriented electrical steel sheet when a predetermined magnetizing force is applied tends to increase as the degree to which the magnetization easy axes of the grains are aligned in the rolling direction of the steel sheet, that is, the orientation of the grains is higher. A magnetic flux density $B_8$ is generally used as an index representing the magnetic flux density. The magnetic flux density $B_8$ is a value of the magnetic flux density of the grain oriented electrical steel sheet excited at a magnetizing force of 800 A/m in the rolling direction. That is, the grain oriented electrical steel sheet having a larger value of the magnetic flux density $B_8$ is more easily magnetized with a certain magnetizing force, the magnetic flux density becomes high, and thus it is suitable for a small-sized and highly efficient transformer.
In addition, an iron loss $W_{17/50}$ is generally used as an index representing the iron loss. The iron loss $W_{17/50}$ is an iron loss when the grain oriented electrical steel sheet is excited by alternating current so as to be a maximum magnetic flux density of 1.7 T under the condition of a frequency of 50 Hz. The grain oriented electrical steel sheet having a smaller value of the iron loss $W_{17/50}$ has a lower energy loss and is suitable for a transformer.
The methods for reducing the iron loss include a method of increasing the electric resistance by containing Si, a method of reducing the thickness of the steel sheet, and a method of decreasing the grain size, which are effective for reducing the eddy-current loss, and a method of aligning the orientation of the grains which is effective for reducing the hysteresis loss. That is, when the value of the magnetic flux density $B_8$ becomes higher, the crystal orientation is aligned with the Goss orientation, and the hysteresis loss is reduced. Thus, when the value of the magnetic flux density $B_8$ becomes higher, the value of the iron loss $W_{17/50}$ tends to be lower. On the other hand, when the growth of Goss-oriented grains is promoted in order to improve the alignment degree of the crystal orientation, the grain size tends to coarsen, and the eddy-current loss increases. Thus, when the grains are excessively coarse even when the value of $B_8$ is high, the iron loss tends to deteriorate. As explained above, there is an antinomy.
In recent years, in order to purposely refine a width of magnetic domain, a method of controlling the magnetic domain by applying strain by irradiation with laser beam, plasma jet, and the like, or by forming grooves by mechanical processing, etching, and the like has been developed. By using such a method, in the steel sheet in which the alignment degree of the crystal orientation is increased and the magnetic flux density is increased, the eddy-current loss can be reduced, and the iron loss can be sufficiently reduced even when the secondary recrystallized grain size coarsens. However, when the strain is applied into the steel sheet, magnetostriction ($\lambda_{P-P}$) increases due to the strain. In addition, when heat treatment is performed at a temperature of approximately 800°C after the magnetic domain refinement, the effect of reducing the iron loss disappears, and therefore the above steel sheet cannot be used for utilization requiring strain relief annealing at 800°C or higher after irradiation. On the other hand, in the magnetic domain refinement using the grooves, there is a problem in that the magnetic flux density $B_8$ decreases.
In general, the grain oriented electrical steel sheet is manufactured as described below. A steel sheet material (slab) including a predetermined amount of Si is subjected to hot rolling, annealing, and cold rolling to obtain a steel sheet having a desired thickness. Then, the steel sheet after cold rolling is annealed (this is also referred to as primary annealing or decarburization annealing). By this annealing, primary recrystallization occurs, and grains having a crystal orientation in which the magnetization easy axes are aligned in the rolling direction and a deviation angle from an ideal Goss orientation expressed by {110}<001> is 10° or less (hereinafter, referred to as Goss-oriented grains) are formed in the primary recrystallized grains. This annealing is also performed as decarburization annealing. Thereafter, an annealing separator including MgO as a main component is applied to the surface of the steel sheet in which primary recrystallization has occurred. Subsequently, the steel sheet to which the annealing separator has been applied is coiled to prepare a steel sheet coil, and this steel sheet coil is subjected to batch treatment annealing (also referred to as secondary recrystallization annealing or final annealing). By this annealing, the Goss-oriented grains encroach on other grains, secondary recrystallization occurs, and a so-called glass film is formed on the surface of the steel sheet. At the time of secondary recrystallization, due to the effect of an inhibitor included in the steel sheet, the Goss-oriented grains preferentially grow, and the grain size may be 100 mm or more in coarse grains. Next, uncoiling the steel sheet coil, annealing for flattening the steel sheet in which the secondary recrystallization has occurred, forming an insulating coating, and the like are performed.

As described above, the grain oriented electrical steel sheet obtain the desired magnetic properties by inducing the secondary recrystallization during final annealing to obtain a crystal structure including Goss-oriented grains aligned in the {110}<001> orientation. In order to obtain this crystal structure, it is effective to increase an existence frequency of Goss-oriented grains which are minor or increase the existence frequency of grains having higher lattice matching with the Goss-oriented grains by the primary annealing. For instance, grains of the {778}<447> ($\approx$ {111}<112>) orientation and the {411}<148> orientation which have higher lattice matching with the {110}<001> orientation and a $\Sigma 9$ coincidence site lattice relationship with a Goss orientation (referred to as CSL oriented grains) are the grains easily encroached by Goss-oriented grains, and thus, it is effective to include a large amount of the above grains in the primary recrystallized structure. However, when the crystal orientation of the grains formed by the primary annealing is controlled, it is difficult to simultaneously improve the existence frequency of the Goss-oriented grains and the existence frequency of the grains having the coincidence site lattice relationship. For instance, in a case where the cold rolling reduction is 85% or more, the existence frequency of the CSL oriented grains which are easily encroached by the Goss-oriented grains increases as the cold rolling reduction increases, whereas the existence frequency of the Goss-oriented grains decreases as the cold rolling reduction increases. In addition, the existence frequency of the Goss-oriented grains which are minor in the primary recrystallization texture increases as the heating rate of the primary annealing increases, whereas the existence frequency of the CSL oriented grains having the {111}<112> orientation which are major in the primary recrystallization texture conversely decreases as the heating rate of the primary annealing increases.

That is, under conventional process control conditions, the existence frequency of the Goss-oriented grains and the existence frequency of the CSL oriented grains that are easily encroached by the Goss-oriented grains cannot be controlled independently.

Here, in regard to the crystal orientation which is identified in the grain oriented electrical steel sheet, a deviation angle from the ideal {110}<001> orientation around the normal direction Z (ND) is referred to as a deviation angle $\alpha$, a deviation angle from the ideal {110}<001> orientation around the transverse direction C (TD) is referred to as a deviation angle $\beta$, and a deviation angle from the ideal {110}<001> orientation around the rolling direction L (RD) is referred to as a deviation angle $\gamma$. Then, an angular deviation $\theta$ is defined as the angular deviation from the ideal {110}<001> orientation obtained by the following (Formula 1) using the deviation angles $\alpha$, $\beta$, and $\gamma$ around the ND, TD, and RD of the crystal orientation identified in the grain oriented electrical steel sheet.

$$\theta = (\alpha^2 + \beta^2 + \gamma^2)^{1/2} \qquad \text{(Formula 1)}$$

As described above, the Goss-oriented grains are not grains having a Goss orientation (ideal Goss orientation) (referred to as ideal Goss-oriented grains) in a strict sense. A direction of the magnetization easy axis (cubic crystal {110} <001>) of each grain and the rolling direction do not always completely coincide with each other, and the angular deviation $\theta$ exists between the direction of the magnetization easy axis and the rolling direction. On the basis of (Formula 1), a grain in which the angular deviation $\theta$ from the ideal Goss orientation is 10° or less is referred to as the Goss-oriented grain (practical Goss-oriented grain). When the angular deviation $\theta$ of the practical Goss-oriented grain increases, the orientation of the grains decreases, and the magnetic flux density $B_8$ decreases.

In general, grains having large angular deviation $\theta$ are also mixed in the Goss-oriented grains included in the steel sheet after primary recrystallization. However, when grains grow by secondary recrystallization, except for the effect of size advantage of grain at an initial stage of secondary recrystallization, the grains having small angular deviation $\theta$ among the Goss-oriented grains have a larger driving force of grain growth and continue to grow preferentially until the secondary recrystallization is completed. Therefore, when the angular deviation $\theta$ of the Goss-oriented grains is smaller, the grain size after secondary recrystallization tends to be larger. That is, in a manufacturing method in which secondary recrystallized grains are highly made to align in the Goss orientation, specific grains are preferentially grown, and thus, the grains size necessarily tends to coarsen.

In addition, at the time of secondary recrystallization, the steel sheet is not flat but curved since it is coiled in a coil shape, but the grains grow while maintaining the linearity of the crystal orientation. Therefore, when the coiled steel sheet is uncoiled and made to be flat after secondary recrystallization, a region in which the direction of the magnetization easy axis is not parallel to the surface of the grain oriented electrical steel sheet arises in the grains. Due to uncoiling explained above, the value of the deviation angle $\beta$ mainly increases, and the angular deviation $\theta$ also increases. The increase in the angular deviation $\theta$ due to uncoiling becomes excessive as the grain size increases. That is, the Goss-oriented grains having small angular deviation $\theta$ tend to preferentially grow during secondary recrystallization, but when the secondary recrystallized grain size is coarse, the angular deviation $\theta$ increases due to uncoiling.

Patent Document 1 discloses a technique in which linear grooves satisfying a predetermined condition are formed by performing an etching treatment on the surface of steel sheet after final cold rolling, and a heating rate in a temperature range where a steel sheet temperature is 500°C or more and 750°C or less is increased in a region of the linear grooves as compared with a region other than the linear grooves by subsequent primary annealing. In Patent Document 1, by purposely separating a region where the heating rate is high and a region where the heating rate is low, a region (region of the linear grooves) where the existence frequency of (110)[001] oriented grains is increased and a region (region other than the linear grooves) where the existence frequency of (111)[112] oriented grains is increased are purposely arranged.

Patent Document 2 discloses a technique of irradiating the surface of a silicon steel sheet with a laser beam plural times at predetermined spacing PL in a rolling direction between cold rolling and final annealing. When the silicon steel sheet is made to be secondary recrystallized by final annealing, a trace line along the laser beam becomes a grain boundary which reaches from one surface to the other surface of the silicon steel sheet. In Patent Document 2, after the final annealing, the length of the grains in the rolling direction is maximally 30 mm which corresponds to the spacing PL of the irradiation, and the angular deviation between the direction of the magnetization easy axis (cubic crystal {110}<001>) and the rolling direction is in the range of 0° to 6°.

Patent Document 3 discloses a method for manufacturing a grain oriented electrical steel sheet that has a small difference in alignment degree to a Goss orientation in the inner and outer circumferences of coils having different curvatures and has a high magnetic flux density on the premise of a high temperature slab heating process. In Patent Document 3, by performing linear local heating on a cold-rolled steel sheet, the linear heated region acts as a barrier for growth of secondary recrystallized grains, and thereby the growth of secondary recrystallized grains is suppressed.

Citation List

Patent Document

Patent Document 1: Japanese Unexamined Patent Application, First Publication No. 2007-169762
Patent Document 2: PCT International Publication No. WO 2012/014290
Patent Document 3: Japanese Unexamined Patent Application, First Publication No. 2022-161269

SUMMARY OF INVENTION

Technical Problem

As described above, the magnetic characteristics of a grain oriented electrical steel sheet have been tried to be improved until today. However, it is insufficient to improve of the magnetic characteristics by the conventional techniques.
The present invention has been made in consideration of the above-mentioned situations. An object of the present invention is to provide a decarburization-annealed steel sheet for a grain oriented electrical steel sheet capable of increasing a magnetic flux density. Specifically, an object is to provide a decarburization-annealed steel sheet for a grain oriented electrical steel sheet capable of increasing a magnetic flux density while suppressing coarsening of a secondary recrystallized grain size.

Solution to Problem

An aspect of the present invention employs the following.
[1] A decarburization-annealed steel sheet for a grain oriented electrical steel sheet according to an aspect of the present invention,

wherein: when a region of at least 100 mm $\times$ 100 mm on a sheet surface is defined as a divided domain, and each domain obtained by subdividing the divided domain into regions of 1 mm $\times$ 1 mm is defined as a divided sub-domain; when an average grain size of grains included in the divided domain is defined as aveD in units of $\mu$m; when a number fraction of a number of grains having a grain size of 3.0 $\times$ aveD or more included in one divided sub-domain in a number of grains included in the divided sub-domain is defined as $F_C$, and a number fraction of a number of grains having a grain size of 3.0 $\times$ aveD or more included in the divided domain in a number of grains included in the divided domain is defined as ave$F_C$; and when divided sub-domains in which a value of $F_C \div$ ave$F_C$ is 1.3 or more are collectively defined as a divided sub-domain group I, an area fraction of the divided sub-domain group I in an area of the divided domain is 0.05% or more and 50% or less, and

wherein: when a deviation angle from an ideal Goss orientation based on a rotation axis parallel to a normal direction is defined as $\alpha$; when a deviation angle from the ideal Goss orientation based on a rotation axis parallel to a transverse direction is defined as $\beta$; when a deviation angle of a crystal orientation measured at a measurement point on the sheet surface is represented as $(\alpha\ \beta)$; when an angular deviation at the measurement point is defined as $\phi = (\alpha^2 + \beta^2)^{1/2}$; when a grain having the angular deviation $\phi$ of 10° or less is defined as a Goss-oriented grain; and when an area fraction of Goss-oriented grains included in the divided sub-domain group I in an area of the divided sub-domain group I is defined as $A^I_{GOSS}$ and an area fraction of Goss-oriented grains included in the divided domain in the area of the divided domain is defined as $aveA_{GOSS}$,

a value of $A^I_{GOSS} \div aveA_{GOSS}$ is 1.3 or more.

[2] The decarburization-annealed steel sheet for the grain oriented electrical steel sheet according to [1],

wherein: when a grain having a misorientation of 10° or less from a crystal orientation having a $\Sigma 9$ coincidence site lattice relationship with the ideal Goss orientation is defined as a CSL oriented grain; and when divided sub-domains other than the divided sub-domain group I included in the divided domain are collectively defined as a divided sub-domain group II,

an area fraction of CSL oriented grains included in the divided sub-domain group II in an area of the divided sub-domain group II may be 10% or more and 50% or less.

Advantageous Effects of Invention

According to the above aspects of the present invention, it is possible to provide a decarburization-annealed steel sheet for a grain oriented electrical steel sheet capable of increasing a magnetic flux density. Specifically, it is possible to provide a decarburization-annealed steel sheet for a grain oriented electrical steel sheet capable of increasing a magnetic flux density while suppressing coarsening of a secondary recrystallized grain size.

BRIEF DESCRIPTION OF DRAWINGS

[FIG. 1] A schema illustrating an instance of using spot electric heating as a local rapid heating method and illustrating an instance of arrangement of a local heating affected region in a decarburization-annealed steel sheet for a grain oriented electrical steel sheet according to the present embodiment.

[FIG. 2] A schema illustrating a distribution of Goss-oriented grains of a decarburization-annealed steel sheet for a grain oriented electrical steel sheet according to an embodiment of the present invention.

DESCRIPTION OF EMBODIMENTS

Hereinafter, a preferred embodiment of the present invention is described in detail. However, the present invention is not limited only to the configuration which is disclosed in the present embodiment, and various modifications are possible without departing from the aspect of the present invention. In addition, the limitation range as described below includes a lower limit and an upper limit thereof. However, the value represented by "more than" or "less than" does not include in the limitation range. Unless otherwise noted, "%" of the chemical composition represents "mass%".

As described above, the existence frequency of practical Goss-oriented grains having small angular deviation $\theta$ and small angular deviation $\phi$ from the {110}<001> orientation which is the ideal Goss orientation increases as the heating rate of the primary annealing (decarburization annealing) increases. On the other hand, for the grains of the {778}<447> ($\approx${111}<112>) orientation, the {411}<148> orientation, and the like which have a $\Sigma 9$ coincidence site lattice relationship with the Goss orientation and tend to be encroached by Goss-oriented grains (referred to as CSL oriented grains), the existence frequency conversely decreases as the heating rate of the primary annealing increases. Therefore, it was difficult to increase the fraction of the CSL oriented grains while increasing the fraction of the practical Goss-oriented grains by the primary annealing.

In the technique described in Patent Document 1, linear grooves are formed on a surface of a steel sheet by etching treatment, a heating rate near the region of the linear grooves is to be increased during primary annealing, and thereby, the region (region of the linear grooves) having a large fraction of Goss-oriented grains and a region (region other than the linear grooves) having a large fraction of CSL oriented grains are arranged. However, in this method, it is difficult to increase the difference in the heating rate during primary annealing between the region of the linear grooves and the other region, and the obtained effect is limited. Specifically, the difference between the heating rate in the region of the linear grooves and the heating rate in the region other than the linear grooves is not so large. For instance, even when the entire steel sheet is heated at 100 °C/sec, since the reduction of the thickness at the region by forming the grooves is only 10% or less as compared with the original thickness (since the depth of the grooves is 20 $\mu$m or less in general and is approximately 10% or less of the sheet thickness), the ratio between the heating rates is equal to or less than the ratio between the thicknesses for the same heat input when considering the thermal conduction of the steel sheet, and thus, the ratio between the fraction of the Goss-oriented grains in the region of the linear grooves and that in the region other than the linear grooves is less likely to increase as compared with the ration between the thickness in the region of the linear grooves and that in the region other than the linear grooves In addition, in this method, the heating rate near the region of the linear grooves is increased during primary annealing, and thus, the grain size of the Goss-oriented grains formed in the region of the linear grooves after the primary annealing is not increased but is almost the same or fine as compared with the grain size of the primary recrystallized grains as an overall average.

In addition, in the technique described in Patent Document 2, the surface of the steel sheet is irradiated with a laser beam before final annealing. However, in this method, the laser beam irradiated region is only controlled to be the grain boundary of the secondary recrystallization, and the orientation of the Goss-oriented grains formed by the primary recrystallization is not controlled. In addition, the region heated by the laser irradiation is only the vicinity of the surface irradiated with the laser, the thermal diffusion to the peripheral region is remarkable, and thus, it is difficult to secure a thermal history that make the steel sheet recrystallize.

In addition, in the technique described in Patent Document 3, the sheet surface after cold rolling is irradiated with a laser beam. However, in this method, similarly to the above, the laser beam irradiated region is only controlled to be the grain boundary of the secondary recrystallization, the heating rate is not controlled, and the orientation of the Goss-oriented grains formed by the primary recrystallization is not controlled. In Patent Document 3, only the grain size of the secondary recrystallized grains in the rolling direction is reduced by making the laser beam irradiated region act as a barrier for the growth of the secondary recrystallized grains, and the temperature range of the grain growth in the locally heated region effective for increasing the size of the Goss-oriented grains in the locally heated region is not secured. Thus, in this method, the difference in the alignment degree to the Goss orientation in the inner and outer circumferences of the coil having different curvatures may be reduced, but the Goss-oriented grains having the crystal orientation close to the ideal Goss orientation cannot be obtained. That is, in this method, a decrease in the magnetic flux density is suppressed by coarsening the grain size of the secondary recrystallized grains in the rolling direction, but the orientation of the Goss-oriented grains is not fundamentally improved.

In the present embodiment, it has been found for the first time that a grain oriented electrical steel sheet having exceptional quality is obtained by performing local rapid heating on a steel sheet to form a locally heated region and then performing primary annealing (decarburization annealing). The locally heated region that forms before the primary annealing is arranged locally on the surface of the steel sheet. The crystal structure of the locally heated region includes one or both of the recrystallized structure and the recovered structure at the end of the local rapid heating. The crystal structure of a non-rapidly heated region other than the locally heated region on the sheet surface consists of a cold-deformed structure which is as-cold rolled.

In the local rapid heating, the heating rate is preferably 500 °C/sec or more, preferably 2000 °C/sec or more, and more preferably 10000 °C/sec or more. As described above, it has been found that, when the primary annealing is performed on the steel sheet after the locally heated region is formed on the surface of the steel sheet before the primary annealing, a large number of grains having the practical Goss orientation are formed in a region thermally affected by the local rapid heating (local heating affected region). In addition, it has become clear that, among the Goss-oriented grains to be formed, the fraction of the Goss-oriented grains having small angular deviation $\theta$ and small angular deviation $\phi$ from the ideal Goss orientation is increased, and the grain size of the Goss-oriented grains after the primary annealing is increased.

The frequency of coarse Goss-oriented grains included in the local heating affected region is higher than the frequency obtained by normal rapid heating of the entire sheet. This feature is considered to be derived from the deformed structure which includes a large amount of residual strain in the peripheral region of the locally heated region. Specifically, in a case where the local rapid heating is performed, the practical Goss-oriented grains formed in the locally heated region preferentially encroach on the non-recrystallization region that is a peripheral region and that includes a large amount of residual strain to coarsen the size during primary annealing. On the other hand, in a case where the normal heating of the entire steel sheet is performed, the initiation and growth of recrystallized grains occur uniformly in the steel sheet, and thus, coarsening explained above seems to hardly occur.

The local heating affected region having the above feature is dispersedly arranged on the surface of the steel sheet by primary annealing, and then secondary annealing is further performed. The Goss-oriented grains formed in the local heating affected region preferentially grow during secondary annealing. A large number of Goss-oriented grains are formed in the local heating affected region, and among them, the Goss-oriented grains that are close to the ideal Goss orientation, have particularly small angular deviation $\theta$ and small angular deviation $\phi$, and have a large grain size after primary annealing are included. In the secondary recrystallization, the above Goss-oriented grains among the grains grow preferentially.

Since the Goss-oriented grains which act as the nucleus of the secondary recrystallization are arranged in the local heating affected region, it is not necessary to form the Goss-oriented grains by the primary annealing in a matrix region other than the local heating affected region, that is, a local heating non-affected region. Accordingly, as the heat treatment condition of the primary annealing, a mild heating condition with a low heating rate may be employed, and a primary annealing condition may be employed in which a large number of CSL oriented grains having the {111}<112> orientation and the {411}<148> orientation, which are easily encroached, are formed in the local heating non-affected region. For instance, by controlling the heating rate of the primary annealing to 300 °C/sec or less, a large number of Goss-oriented grains close to the ideal Goss orientation and having large grain size are formed in the local heating affected region, while Goss-oriented grains are hardly formed in the local heating non-affected region, and conversely, a large number of CSL oriented grains are formed.

As described above, in the local heating affected region of the steel sheet (decarburization-annealed steel sheet) in which the local rapid heating and the primary annealing have been completed, a large number of Goss-oriented grains close to the ideal Goss orientation and having large grain size are included. On the other hand, in the matrix region (local heating non-affected region), the Goss-oriented grains having large size are hardly included, whereas a large number of CSL oriented grains that are easily encroached may be included. When the above steel sheet is subjected to secondary annealing, Goss-oriented grains that are included in the local heating affected region, are close to the ideal Goss orientation, and have large grain size initiate to grow preferentially and grow toward the local heating non-affected region.

As an aspect of local rapid heating, a case where spot electric heating by electric resistance heating is used will be described. In the spot electric heating, spot electrodes are arranged and contacted so as to be opposite to each other on both surfaces of the steel sheet, and a current flows between the spot electrodes to perform the spot electric heating on a region where the electrodes are held on the steel sheet. Steel having the composition indicated in Table 1 was used, and hot rolling and cold rolling were performed to obtain a cold-rolled steel sheet having a thickness of 0.22 mm. The steel sheet was subjected to the spot electric heating. The spot electric heating was performed using copper electrodes having a diameter of 3 mm under the conditions of a flowing current of 5.0 kA or less which was a range where the sheet surface was not melted, a time of current flow of 20 to 80 milliseconds, an electrode force of 50 to 500 kgf, and an electrode retention time after current flow of 0.2 seconds. On the surface of the cold-rolled steel sheet, the spot electric heating was performed in a grid pattern at a pitch of 20 mm in the rolling direction and a pitch of 30 mm in the width direction (transverse direction) to form the locally heated region. This cold-rolled steel sheet was subjected to decarburization annealing (primary annealing). In the decarburization annealing, the cold-rolled steel sheet was heated at a heating rate of 20 °C/sec and held at 830°C for 90 seconds.

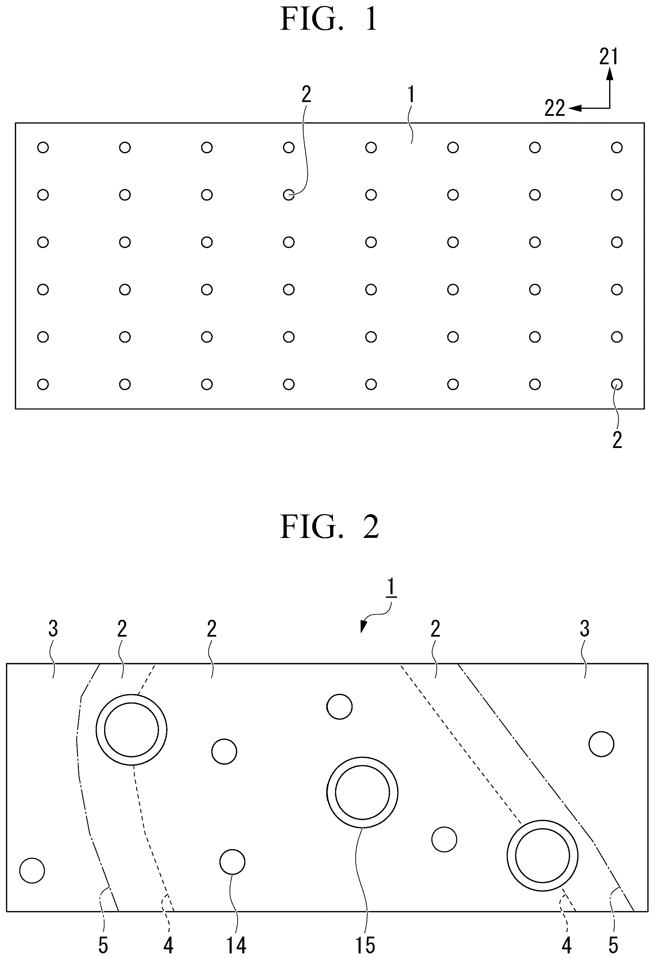

FIG. 1 illustrates an instance of arrangement of the local heating affected region in the decarburization-annealed steel sheet for the grain oriented electrical steel sheet according to the present embodiment. In FIG. 1, the steel sheet 1, the local heating affected regions 2, the rolling direction 21, and the width direction (transverse direction) 22 are schematically illustrated.

[Table 1]

| CHEMICAL COMPOSITION (mass%) | | | | | |
|---|---|---|---|---|---|
| C | Si | Mn | S | Al | N |
| 0.06 | 3.35 | 0.1 | 0.007 | 0.027 | 0.008 |

In order to prepare an observed section for Electron Back Scattering Diffraction pattern (EBSD) from the surface of a decarburization-annealed steel sheet (steel sheet after local rapid heating and after primary annealing), a surface was smoothed by mechanical polishing, and electrolytic polishing was performed to remove added strain of the surface. Thereafter, an image quality (IQ) value and a crystal orientation in a region including the locally heated region were measured by the EBSD under condition of a step of 0.5 $\mu$m. FIG. 2 is a schema illustrating a distribution of the Goss-oriented grains of the decarburization-annealed steel sheet for the grain oriented electrical steel sheet according to the present embodiment.

An electrode used for spot electric heating has a circular shape, and the diameter thereof is preferably 0.5 to 10 mm$\phi$, and more preferably 1 to 5 mm$\phi$ in an equivalent circle diameter. Note that, in the above description, the electrode having the circular shape is used, but in so far as the heating rate of the cold-rolled steel sheet is locally increased and Goss-oriented grains are formed and grown in this region, the electrode shape may be another shape, for instance, an elliptical shape or a linear shape.

In FIG. 2, based on the definition of the angular deviation $\phi = (\alpha^2 + \beta^2)^{1/2}$, grains having the angular deviation $\phi$ of 10° or less from the ideal Goss orientation (Goss-oriented grains 14) are indicated by "○". Further, among the grains having the angular deviation $\phi$ of 10° or less, grains having a coarse grain size (coarse Goss-oriented grains 15) are indicated by "⊙". Note that the coarse Goss-oriented grains 15 indicate Goss-oriented grains having a grain size of 3 times or more as compared with an average grain size (aveD).

As illustrated in FIG. 2, the decarburization-annealed steel sheet (steel sheet 1) for the grain oriented electrical steel sheet according to the present embodiment includes the Goss-oriented grains 14 and also includes the coarse Goss-oriented grains 15. In particular, the region including the coarse Goss-oriented grains 15 corresponds to the local heating affected region 2. Note that, although a locally heated region boundary 4 and a local heating affected region boundary 5 are schematically illustrated in FIG. 2, it is not easy to identify these boundaries by microstructure observation. However, in the present embodiment, the region including the coarse Goss-oriented grains 15 can be regarded as the local heating affected region 2.

The decarburization-annealed steel sheet was further subjected to nitridation, applying an annealing separator including MgO as a main component, and then secondary annealing. The secondary annealing conditions are a hydrogen-nitrogen atmosphere, a heating rate of 15°C/hr (°C/hour), and holding at 1200°C for 20hr (hour). The obtained steel sheet was subjected to macroetching to reveal grain boundaries. When a region corresponding to the local heating affected region was observed in the steel sheet after the macroetching, it was observed that plural secondary recrystallized grains grew from the region corresponding to the local heating affected region or that the secondary recrystallized grain grew from the center of the region corresponding to the local heating affected region. In addition, in the region corresponding to the local heating affected region, fine grains of 2 mm or less may or may not be observed as a vestige of the local heating affected region. Although the secondary recrystallized macrostructure may slightly change depending on the condition of the local heating, the alignment degree of the Goss orientation can be increased as compared with the case where the local heat treatment is not performed, and as a result, the magnetic flux density $B_8$ of the steel sheet is improved. It was confirmed for the crystal orientation of the obtained secondary recrystallized grains that the deviation from the ideal Goss orientation was extremely small ($B_8$ was improved to 1.96 T in this steel sheet). As described above, the decarburization-annealed steel sheet according to the present embodiment includes the coarse Goss-oriented grains 15 in addition to the Goss-oriented grains 14. It is considered that the coarse Goss-oriented grains 15 which are close to the ideal Goss orientation and which have the size advantage are formed, and thereby, the crystal orientation of the secondary recrystallized grains is improved.

The features of the decarburization-annealed steel sheet for the grain oriented electrical steel sheet according to the present embodiment will be described in detail. The above decarburization-annealed steel sheet shown in FIG. 2 satisfies the following features.

A decarburization-annealed steel sheet for a grain oriented electrical steel sheet according to the present embodiment,

wherein: when a region of at least 100 mm $\times$ 100 mm on a sheet surface is defined as a divided domain, and each domain obtained by subdividing the divided domain into regions of 1 mm $\times$ 1 mm is defined as a divided sub-domain; when an average grain size of grains included in the divided domain is defined as aveD in units of $\mu$m; when a number fraction of a number of grains having a grain size of 3.0 $\times$ aveD or more included in one divided sub-domain in a number of grains included in this divided sub-domain is defined as $F_C$, and a number fraction of a number of grains having a grain size of 3.0 $\times$ aveD or more included in the divided domain in a number of grains included in the divided domain is defined as ave$F_C$; and when divided sub-domains in which a value of $F_C \div$ ave$F_C$ is 1.3 or more are collectively defined as a divided sub-domain group I,

an area fraction of the divided sub-domain group I in an area of the divided domain is 0.05% or more and 50% or less, and

wherein: when a deviation angle from an ideal Goss orientation based on a rotation axis parallel to a normal direction is defined as $\alpha$; when a deviation angle from the ideal Goss orientation based on a rotation axis parallel to a transverse direction is defined as $\beta$; when a deviation angle of a crystal orientation measured at a measurement point on the sheet surface is represented as ($\alpha$ $\beta$); when an angular deviation at the measurement point is defined as $\phi = (\alpha^2 + \beta^2)^{1/2}$; when a grain having the angular deviation $\phi$ of 10° or less is defined as a Goss-oriented grain; and when an area fraction of Goss-oriented grains included in the divided sub-domain group I in an area of the divided sub-domain group I is defined as $A^I_{GOSS}$ and an area fraction of Goss-oriented grains included in the divided domain in the area of the divided domain is defined as ave$A_{GOSS}$,

a value of $A^I_{GOSS} \div$ ave$A_{GOSS}$ is 1.3 or more.

Herein, in the present embodiment, the above grains are determined by identifying the grain boundaries where the disorientation from the adjacent measurement point is 1° or more. In addition, the above grain size indicates an equivalent circle diameter. In addition, the above average grain size indicates a number average diameter.

In addition, in the present embodiment, the angular deviation $\phi$ is defined using the deviation angle $\alpha$ and the deviation angle $\beta$. The general angular deviation $\theta$ is often evaluated using three components: the deviation angle $\alpha$, the deviation angle $\beta$, and the deviation angle $\gamma$. However, since the present embodiment is particularly directed to improvement in magnetic flux density, the angular deviation $\phi$ is defined using two components: the deviation angle $\alpha$

and the deviation angle $\beta$ except for the deviation angle $\gamma$ which does not significantly influence the magnetic flux density.

In the decarburization-annealed steel sheet according to the present embodiment, when the area fraction of the divided sub-domain group I in the area of the divided domain is 0.05% or more and when the value of $A^I_{GOSS} \div aveA_{GOSS}$ is 1.3 or more, the Goss-oriented grains grow in a preferable form in the secondary recrystallization stage, and thereby, it is possible to obtain the grain oriented electrical steel sheet having excellent magnetic characteristics.

For instance, the fact that the area fraction of the divided sub-domain group I in the area of the divided domain is 0.05% or more indicates that when a region of 100 mm $\times$ 100 mm is set as the divided domain, five or more divided sub-domains in which coarse grains are preferably included (divided sub-domains in which the value of $F_C \div aveF_C$ is 1.3 or more) are included in 10000 divided sub-domains. In addition, the fact that the value of $A^I_{GOSS} \div aveA_{GOSS}$ is 1.3 or more indicates that the area fraction of the Goss-oriented grains included in the divided sub-domain (divided sub-domain group I) in which coarse grains are preferably included is large with a significant difference as compared with the area fraction of the Goss-oriented grains included in the matrix. That is, the decarburization-annealed steel sheet satisfying these conditions indicates that the region (divided sub-domain group I) where the coarse grains are included and the area fraction of the Goss-oriented grains is large exists in the matrix.

Additionally, the decarburization-annealed steel sheet satisfying the above conditions indicates that each of the divided domains randomly provided in the steel sheet includes averagely the divided sub-domains (divided sub-domain group I) where the coarse grains are included and the area fraction of the Goss-oriented grains is large.

Therefore, in the decarburization-annealed steel sheet according to the present embodiment, the coarse Goss-oriented grains (Goss-oriented grains having the large grain size) close to the ideal Goss orientation uniformly and preferentially grow over a wide area within the steel sheet during secondary recrystallization, the grain growth stops when the preferentially grown Goss-oriented grains encounter with other preferentially grown Goss-oriented grains, and as a result, the grain size of the Goss-oriented grains (secondary recrystallized grains) becomes small. In this grain oriented electrical steel sheet, it is possible to increase the magnetic flux density while suppressing coarsening of the secondary recrystallized grain size as compared with the conventional techniques. In addition, since coarsening of the secondary recrystallized grain size is suppressed, the grain oriented electrical steel sheet is also excellent in iron loss and magnetostriction.

The area fraction of the divided sub-domain group I in the area of the divided domain is preferably 0.2% or more, more preferably 0.5% or more, still more preferably 1% or more. On the other hand, the area fraction is preferably 50% or less because the region (matrix) where the coarse Goss-oriented grains secondary recrystallize preferentially is required. The upper limit of the area fraction may be 40% or 30%.

Note that the fact that the value of $F_C \div aveF_C$ is 1.3 or more indicates that the region including coarse grains is preferably included in the matrix as described above. As a result of investigation by the present inventors, in a case where normal heating of the entire sheet is performed without performing local heating, the value of $F_C \div aveF_C$ is only approximately 1.1 at the maximum, even when the heating rate is increased to 10000 °C/sec for instance. This is because, as described above, when the local heating is performed before decarburization annealing, the recrystallized grains (for instance, Goss-oriented grains) formed in the locally heated region preferentially grow while encroaching on the non-recrystallization region which is the peripheral region thereof during decarburization annealing, whereas when the heating of the entire sheet is performed, specific grains (for instance, Goss-oriented grains) is less likely to preferentially grow because recrystallization occurs averagely within the steel sheet even when the heating rate is increased. Note that the upper limit of the value of $F_C \div aveF_C$ is not particularly limited, and for instance, the upper limit may be 100.

Similarly, the fact that the value of $A^I_{GOSS} \div aveA_{GOSS}$ is 1.3 or more indicates that, as described above, the area fraction of the Goss-oriented grains included in the divided sub-domain group I is preferably large. As a result of investigation by the present inventors, in a case where the normal heating of the entire sheet is performed without performing local heating, even when the heating rate is increased to 10000 °C/sec for instance, the divided sub-domain in which the value of $F_C \div aveF_C$ is 1.3 or more is not originally formed, the divided sub-domain group I is not also formed, and therefore, the value of $A^I_{GOSS} \div aveA_{GOSS}$ does not become 1.3 or more. Note that the upper limit of the value of $A^I_{GOSS} \div aveA_{GOSS}$ is not particularly limited, and for instance, the upper limit may be 100.

It is preferable that the divided domains including the divided sub-domain group I satisfying the above condition exist uniformly over the entire decarburization-annealed steel sheet. However, the above condition may not be satisfied over the entire sheet surface of the decarburization-annealed steel sheet. For instance, when ten divided domains which are discrete from each other are randomly set on the sheet surface of the decarburization-annealed steel sheet and when the above condition is evaluated in each of the ten divided domains, the above condition (the area fraction of the divided sub-domain group I in the area of the divided domain is 0.05% or more, and the value of $A^I_{GOSS} \div aveA_{GOSS}$ is 1.3 or more) may be satisfied in five or more divided domains. At this time, the grain oriented electrical steel sheet having excellent magnetic characteristics can be finally obtained.

The number of divided domains satisfying the above condition is preferably seven or more, and more preferably eight or more in the ten domains. The upper limit of the number of divided domains satisfying the above condition is ten because a larger number thereof is preferable.

When the decarburization-annealed steel sheet according to the present embodiment is used, the coarse Goss-oriented grains close to the ideal Goss orientation (Goss-oriented grains having the large grain size) are preferentially grown among a large number of Goss-oriented grains in the local heating affected region during secondary recrystallization. Therefore, it is possible to obtain the steel sheet occupied by the secondary recrystallized grains close to the ideal Goss orientation without coarsening the secondary recrystallized grains. For instance, at the time when the local heating affected regions are discretely arranged on the sheet surface, if the local heating affected regions are appropriately arranged on the sheet surface, it is possible to control the size, shape, and arrangement of the grains after the secondary annealing. For instance, the Goss-oriented grain initiates to grow from one local heating affected region, the grain growth stops when the grain encounters with another Goss-oriented grain which initiates to grow from an adjacent local heating affected region, and thereby, the grain size of the Goss-oriented grains after secondary recrystallization becomes small. In the case, it is possible to obtain the steel sheet excellent in iron loss. In particular, as described above, in the initial stage of the secondary annealing, the Goss-oriented grains preferentially grown from the local heating affected region have the crystal orientation close to the ideal Goss orientation, and as a result, excellent magnetic flux density can be obtained even though the secondary recrystallized grain size is small.

That is, when the decarburization-annealed steel sheet according to the present embodiment is used, it is possible to improve the magnetic flux density while suppressing coarsening of the secondary recrystallized grain size, and thus, it is possible to omit or reduce the refinement of the width of magnetic domain by applying the strain or forming the grooves. Specifically, since the effect of the magnetic domain refinement can be preferably obtained by the grain boundaries that increase as a result of the refinement of the secondary recrystallized grain size, the magnetic domain is refined without applying the conventional magnetic domain control technique. Therefore, it is not necessary to apply the strain into the steel sheet contrary to the conventional magnetic domain control technique, and thus, it is possible to suppress an increase in the magnetostriction ($\lambda_{P-P}$). In addition, it is not necessary to form the grooves on the steel sheet contrary to the conventional magnetic domain control technique, and thus, it is possible to suppress a decrease in the magnetic flux density $B_8$. In addition, it is possible to use the grain oriented electrical steel sheet using the decarburization-annealed steel sheet according to the present embodiment for utilization requiring the strain relief annealing at 800°C or higher.

Moreover, in the decarburization-annealed steel sheet according to the present embodiment, it is preferable that the area fraction of the CSL oriented grains is high in order to make the coarse Goss-oriented grains to preferentially grow during secondary annealing.

For instance, in the present embodiment, when a grain having a misorientation of 10° or less from a crystal orientation having a $\Sigma 9$ coincidence site lattice relationship with the ideal Goss orientation is defined as a CSL oriented grain, and when divided sub-domains other than the divided sub-domain group I included in the divided domain are collectively defined as a divided sub-domain group II, an area fraction of CSL oriented grains included in the divided sub-domain group II in an area of the divided sub-domain group II is favorably 10% or more and 50% or less.

When the area fraction of the CSL oriented grains is 10% or more, the coarse Goss-oriented grains can be preferentially grown during secondary annealing. The area fraction of the CSL oriented grains is preferably 12% or more, and more preferably 15% or more. On the other hand, the upper limit of the area fraction of the CSL oriented grains is not particularly limited, and for instance, the upper limit may be 40% or 30%.

Note that, the area fraction of the CSL oriented grains indicates the total area fraction of grains having the crystal orientation where a misorientation (disorientation) is within 10° from the crystal orientation having the $\Sigma 9$ coincidence site lattice relationship with the ideal Goss orientation {110}<001>, and corresponds to, for instance, the total area fraction of {778}<447> oriented grains, {111}<112> oriented grains, {411}<148> oriented grains, and the like.

Herein, the average grain size aveD, the number fraction $F_C$, the number fraction ave$F_C$, the deviation angle $\alpha$, the deviation angle $\beta$, the area fraction $A^I_{GOSS}$ of the Goss-oriented grains, the area fraction ave$A_{GOSS}$ of the Goss-oriented grains, the area fraction of the CSL oriented grains, and the like may be measured by the EBSD. When the region to be measured is larger than the region that can be measured by the EBSD, the region to be measured may be divided and EBSD measurement may be performed plural times. For instance, in the EBSD measurement, the step size may be 0.5 $\mu$m.

Next, a preferred chemical composition of the decarburization-annealed steel sheet according to the present embodiment will be described.

First, the chemical composition of the grain oriented electrical steel sheet as a final product manufactured using the decarburization-annealed steel sheet according to the present embodiment will be described.

The grain oriented electrical steel sheet as the final product may contain, as a chemical composition, Si: 2.0% to 7.0% in mass percentage and the balance consisting of Fe and impurities.

In addition, this grain oriented electrical steel sheet may contain a known optional element as substitution for part of Fe for improving the magnetic characteristics. A lower limit of the optional element does not need to be limited, and the lower limit may be 0%. Moreover, an upper limit of the optional element may be a value in which the magnetic flux density or the iron loss does not significantly deteriorate. For instance, the upper limit of each optional element is described below.

The grain oriented electrical steel sheet (base steel sheet) as the final product may contain, as a chemical composition, by mass%, at least one of:

C: 0.005% or less,
Si: 2.0 to 7.0%,
Mn: 1.00% or less,
S and Se: 0.015% or less in total,
Al: 0.065% or less,
N: 0.005% or less,
Nb, V, Mo, Ta, and W: 0.050% or less in total,
Cu: 0.40% or less,
Bi: 0.010% or less,
B: 0.080% or less,
P: 0.50% or less,
Ti: 0.015% or less,
Sn: 0.10% or less,
Sb: 0.10% or less,
Cr: 0.30% or less, and
Ni: 1.00% or less.

The optional elements may be contained according to a known purpose, a lower limit of the optional elements does not need to be limited, and the lower limit may be 0%. Note that, the total amount of S and Se represents that at least one of S and Se is included and the amount thereof corresponds to the above total amount. Similarly, the total amount of one or more of Nb, V, Mo, Ta, and W represents that at least one of Nb, V, Mo, Ta, and W is included and the amount thereof corresponds to the above total amount.

In the grain oriented electrical steel sheet, the chemical composition changes relatively drastically (the amount of alloying element decreases) through the decarburization annealing and through the purification annealing during secondary recrystallization. Depending on the element, the content may be decreased to 50 ppm or less or may reach to an undetectable level (1 ppm or less) using the typical analytical methods if the purification annealing is sufficiently performed.

In addition, even if the above optional elements are contained as impurities, the effects of the present embodiment are not impaired. The impurities correspond to elements which are contaminated during industrial production of steel sheet from ores and scrap that are used as a raw material of steel, or from environment of a manufacturing process. For instance, an upper limit of the impurities may be 5% in total.

The chemical composition as described above may be measured by typical analytical methods for the steel. For instance, the chemical composition may be measured by using ICP-AES (Inductively Coupled Plasma-Atomic Emission Spectrometer: inductively coupled plasma emission spectroscopy spectrometry). Specifically, it is possible to obtain the chemical composition by conducting the measurement by ICP-AES (measurement device) under the condition based on calibration curve prepared in advance using samples with 35mm square taken from the steel sheet. In addition, C and S may be measured by the infrared absorption method after combustion, and N may be measured by the thermal conductometric method after fusion in a current of inert gas.

The chemical composition of the decarburization-annealed steel sheet according to the present embodiment contains, for instance, the elements described below.

The decarburization-annealed steel sheet according to the present embodiment may contain, as a chemical composition, by mass%:

C: 0 to 0.0050%,
Si: 2.0 to 7.0%,
Mn: 0.05 to 1.0%,
S and Se: 0.003 to 0.035% in total,
Al: 0.010 to 0.0650%,
N: 0 to 0.012%,
Nb, V, Mo, Ta, and W: 0 to 0.050% in total,
Cu: 0 to 0.40%,
Bi: 0 to 0.010%,
B: 0 to 0.080%,
P: 0 to 0.50%,
Ti: 0 to 0.0150%,

Sn: 0 to 0.10%,
Sb: 0 to 0.10%,
Cr: 0 to 0.30%,
Ni: 0 to 1.0%, and
the balance consisting of Fe and impurities.

C: 0 to 0.0050%

Carbon (C) is an element effective in controlling the primary recrystallized structure in the manufacturing process. However, when the C content in the final product is excessive, the magnetic characteristics are negatively affected. For instance, the C content in the slab is 0.085% or less. C is decarburized and purified in the decarburization annealing process and the final annealing process, and then, the content becomes 0.0050% or less. The lower limit of the C content may be more than 0% or may be 0.001% from the productivity standpoint in the industrial production.

Si: 2.0 to 7.0%

Silicon (Si) is an element which increases the electric resistance of the grain oriented electrical steel sheet and thereby decreases the iron loss. When the Si content is less than 2.0%, $\gamma$ transformation occurs during the final annealing and the crystal orientation of the grain oriented electrical steel sheet is impaired. On the other hand, when the Si content is more than 7.0%, the cold workability deteriorates and the cracks tend to occur during cold rolling. The lower limit of the Si content is preferably 2.5%, and is more preferably 3.0%. The upper limit of the Si content is preferably 4.5%, and is more preferably 4.0%.

Mn: 0.05 to 1.0%

Manganese (Mn) forms MnS and/or MnSe by bonding to S and/or Se, which act as the inhibitor. When Mn is included and the Mn content is 0.05 to 1.0%, the secondary recrystallization becomes stable. The nitride of the Nb group element (Nb, V, Mo, Ta, and W) can bear part of the function of the inhibitor. In the case, the inhibitor intensity as MnS and/or MnSe in general is controlled weakly. Thus, the upper limit of the Mn content is preferably 0.50%, and is more preferably 0.20%.

S and Se: 0.003 to 0.035% in total

Sulfur (S) and Selenium (Se) form MnS and/or MnSe by bonding to Mn, which act as the inhibitor. When at least one of S and Se is included, and when the total amount of S and Se is 0.003 to 0.035%, the secondary recrystallization becomes stable. The nitride of the Nb group element can bear part of the function of the inhibitor. In the case, the inhibitor intensity as MnS and/or MnSe in general is controlled weakly. Thus, the upper limit of the total amount of S and Se is preferably 0.025%, and is more preferably 0.010%. When S and/or Se remain in the steel after the final annealing, the compound is formed, and thereby, the iron loss is deteriorated. Thus, it is preferable to reduce S and Se as much as possible by the purification during the final annealing.
Here, the total amount of S and Se represents that at least one of S and Se is included and the amount thereof corresponds to the above total amount.

Al: 0.010 to 0.0650%

Aluminum (Al) forms (Al, Si)N by bonding to N, which acts as the inhibitor. When Al is included and the Al content is 0.010 to 0.0650%, the inhibitor AlN formed by the nitridation mentioned below expands the temperature range of the secondary recrystallization, and the secondary recrystallization becomes stable especially in higher temperature range. Therefore, the Al content is 0.010 to 0.0650%. The lower limit of the Al content is preferably 0.020%, and is more preferably 0.025%. The upper limit of the Al content is preferably 0.040%, and is more preferably 0.035% from the stability standpoint in the secondary recrystallization.

N: 0 to 0.012%

Nitrogen (N) bonds to Al and acts as the inhibitor. The lower limit thereof is not limited because it is possible to include N by the nitridation in midstream of the manufacturing process. For instance, the lower limit of the N content may be more than 0% or may be 0.001%. When N is included and the N content is more than 0.012%, the blister which is a kind of defect tends to be formed in the steel sheet. The upper limit of the N content is preferably 0.010%, and is more preferably 0.009%. N is purified in the final annealing process, and then, the N content becomes 0.005% or less after the final annealing process.

The balance of the chemical composition consists of Fe and impurities. The impurities correspond to elements which are contaminated during industrial production of steel from ores and scrap that are used as a raw material of steel, or from environment of a manufacturing process. For instance, an upper limit of the impurities may be 5% in total.

In consideration of the influence on the magnetic characteristics and the improvement of the inhibitors function by forming compounds, the above chemical composition may include the known optional elements as substitution for part of Fe. For instance, the optional elements as substitution for part of Fe may be the following elements.

Total of Nb, V, Mo, Ta, and W: 0 to 0.050%

The total amount of niobium (Nb), vanadium (V), molybdenum (Mo), tantalum (Ta), and tungsten (W) may be 0.050% or less. When the Nb group element (at least one of Nb, V, Mo, Ta, and W) is utilized as part of the inhibitor, the effect of improving $B_8$ is obtained. On the other hand, when the Nb group element remains excessively in the base steel sheet, the magnetic characteristics may be adversely affected. Therefore, the total amount of Nb, V, Mo, Ta, and W may be 0.050% or less. Further, when the total amount of the Nb group elements is 0.030% or less (preferably 0.003% or more and 0.030% or less), the secondary recrystallization starts at appropriate timing, which is preferable. Moreover, the orientation of the formed secondary recrystallized grain becomes very favorable, and the microstructure is finally controlled to be favorable for the magnetization characteristics. In particular, Nb and Ta prominently shows the above effects, which is preferable. The lower limit of the total amount of the Nb group elements does not need to be limited, and the lower limit may be 0%. The lower limit is preferably 0.003%.

The total amount of the Nb group elements is more preferably 0.004 to 0.020%. The total amount is more preferably 0.005 to 0.010%.

Here, the total amount of the Nb group elements represents that at least one of Nb, V, Mo, Ta, and W is included and the amount thereof corresponds to the above total amount.

In addition, the decarburization-annealed steel sheet according to the present embodiment may contain, as the optional element, by mass%, at least one of:

Cu: 0 to 0.40%,
Bi: 0 to 0.010%,
B: 0 to 0.080%,
P: 0 to 0.50%,
Ti: 0 to 0.0150%,
Sn: 0 to 0.10%,
Sb: 0 to 0.10%,
Cr: 0 to 0.30%, and
Ni: 0 to 1.0%.

The optional elements may be contained according to a known purpose, a lower limit of the optional elements does not need to be limited, and the lower limit may be 0%.

The chemical composition of the decarburization-annealed steel sheet according to the present embodiment may be measured by the above analytical methods, as with the chemical composition of the grain oriented electrical steel sheet as the final product.

Next, an aspect of a preferred method for manufacturing the decarburization-annealed steel sheet for the grain oriented electrical steel sheet according to the present embodiment will be described.

The method for manufacturing the decarburization-annealed steel sheet according to the present embodiment is not limited to the following method. The following manufacturing method is an instance for manufacturing the decarburization-annealed steel sheet according to the present embodiment.

Moreover, the processes and the quantitative conditions in each process described below are an instance employed to confirm the operability of the present embodiment, so that the present embodiment is not limited to the processes and the quantitative values. The method for manufacturing the decarburization-annealed steel sheet according to the present embodiment can employ various types of conditions as long as the conditions do not depart from the scope of the present embodiment and can achieve the object of the present embodiment.

In the method for manufacturing the decarburization-annealed steel sheet according to the present embodiment, it is possible to apply a conventional known method for manufacturing the grain oriented electrical steel sheet as fundamental processes. For instance, the conventional method for manufacturing the grain oriented electrical steel sheet includes a manufacturing method utilizing MnS and AlN as inhibitor which are formed by high temperature slab heating, a manufacturing method utilizing AlN as inhibitor which is formed by low temperature slab heating and subsequent nitridation, and the like. The method for manufacturing the decarburization-annealed steel sheet according to the present embodiment is not limited to a specific manufacturing method. Hereinafter, the method which employs the low temperature slab heating with the nitridation is explained for instance.

(Casting Process)

In the casting process, a slab is made. For instance, a method for making the slab is as follow. A molten steel is made (a steel is melted). The slab is made by using the molten steel. The slab may be made by continuous casting. An ingot may be made by using the molten steel, and then, the slab may be made by blooming the ingot. A thickness of the slab is not particularly limited. The thickness of the slab may be 150 to 350 mm for instance. The thickness of the slab is preferably 220 to 280 mm. The slab with the thickness of 10 to 70 mm which is a so-called thin slab may be used. When using the thin slab, it is possible to omit a rough rolling before final rolling in the hot rolling process.
For instance, as the chemical composition, the above slab may include the following elements.

C: 0.085% or less

Carbon (C) is an element effective in controlling the primary recrystallized structure in the manufacturing process. However, when the content in the final product is excessive, the magnetic characteristics are negatively affected. Thus, the C content may be 0.085% or less. The upper limit of the C content is preferably 0.075%. C is decarburized and purified in the decarburization annealing process and the final annealing process, and then, the content becomes 0.005% or less. When C is included, the lower limit of the C content may be more than 0%, and may be 0.001% from the productivity standpoint in the industrial production.

Si: 2.0 to 7.0%

Silicon (Si) is an element which increases the electric resistance of the grain oriented electrical steel sheet and thereby decreases the iron loss. When the Si content is less than 2.0%, an austenite transformation occurs during the final annealing and the crystal orientation of the grain oriented electrical steel sheet is impaired. On the other hand, when the Si content is more than 7.0%, the cold workability deteriorates and the cracks tend to occur during cold rolling. The lower limit of the Si content is preferably 2.5%, and is more preferably 3.0%. The upper limit of the Si content is preferably 4.5%, and is more preferably 4.0%.

Mn: 0.05 to 1.00%

Manganese (Mn) forms MnS and/or MnSe by bonding to S and/or Se, which act as the inhibitor. When Mn is included and the Mn content is 0.05 to 1.00%, the secondary recrystallization becomes stable. The nitride of the Nb group element can bear part of the function of the inhibitor. In the case, the inhibitor intensity as MnS and/or MnSe in general is controlled weakly. Thus, the upper limit of the Mn content is preferably 0.50%, and is more preferably 0.20%.

At least one of S and Se: 0.003 to 0.035% in total

Sulfur (S) and Selenium (Se) form MnS and/or MnSe by bonding to Mn, which act as the inhibitor. When at least one of S and Se is included, and when the total amount of S and Se is 0.003 to 0.035%, the secondary recrystallization becomes stable. The nitride of the Nb group element can bear part of the function of the inhibitor. In the case, the inhibitor intensity as MnS and/or MnSe in general is controlled weakly. Thus, the upper limit of the total amount of S and Se is preferably 0.025%, and is more preferably 0.010%. When S and/or Se remain in the steel after the final annealing, the compound is formed, and thereby, the iron loss is deteriorated. Thus, it is preferable to reduce S and Se as much as possible by the purification during the final annealing.
Here, the total amount of S and Se represents that at least one of S and Se is included and the amount thereof corresponds to the above total amount.

Al: 0.010 to 0.065%

Aluminum (Al) forms (Al, Si)N by bonding to N, which acts as the inhibitor. When Al is included and the Al content is 0.010 to 0.065%, the inhibitor AlN formed by the nitridation mentioned below expands the temperature range of the secondary recrystallization, and the secondary recrystallization becomes stable especially in higher temperature range. Therefore, the Al content is 0.010 to 0.065%. The lower limit of the Al content is preferably 0.020%, and is more preferably 0.025%. The upper limit of the Al content is preferably 0.040%, and is more preferably 0.035% from the stability standpoint in the secondary recrystallization.

N: 0.012% or less

Nitrogen (N) bonds to Al and acts as the inhibitor. The lower limit thereof is not limited because it is possible to include N by the nitridation in midstream of the manufacturing process. For instance, the lower limit of the N content may be more than 0% or may be 0.001%. When N is included and the N content is more than 0.012%, the blister which is a kind of defect tends to be formed in the steel sheet. The upper limit of the N content is preferably 0.010%, and is more preferably 0.009%. N is purified in the final annealing process, and then, the N content becomes 0.005% or less after the final annealing process.

The balance of the chemical composition consists of Fe and impurities. The impurities correspond to elements which are contaminated during industrial production of steel from ores and scrap that are used as a raw material of steel, or from environment of a manufacturing process. For instance, an upper limit of the impurities may be 5% in total.

In addition to solving manufacturing problems, in consideration of the influence on the magnetic characteristics and the improvement of the inhibitors function by forming compounds, the above chemical composition may include the known optional elements as substitution for part of Fe. For instance, the optional elements as substitution for part of Fe may be the following elements.

Nb group element: 0.050% or less

The total amount of the Nb group element (at least one of Nb, V, Mo, Ta, and W) may be 0.050% or less. When the Nb group element (at least one of Nb, V, Mo, Ta, and W) is utilized as part of the inhibitor, and when the total amount of the Nb group element is 0.030% or less, the secondary recrystallization starts at appropriate timing, which is preferable. Moreover, the orientation of the formed secondary recrystallized grain becomes very favorable, and the microstructure is finally controlled to be favorable for the magnetization characteristics. In particular, Nb and Ta prominently shows the above effects, which is preferable. The lower limit of the total amount of the Nb group elements does not need to be limited, and the lower limit may be 0%. The lower limit is preferably 0.003%.

The total amount of the Nb group elements is more preferably 0.004 to 0.020%. The total amount is more preferably 0.005 to 0.010%.

Here, the total amount of the Nb group elements represents that at least one of Nb, V, Mo, Ta, and W is included and the amount thereof corresponds to the above total amount.

In addition, the slab may contain, as the optional element, by mass%, at least one of:

Cu: 0.40% or less,
Bi: 0.010% or less,
B: 0.080% or less,
P: 0.50% or less,
Ti: 0.015% or less,
Sn: 0.10% or less,
Sb: 0.10% or less,
Cr: 0.30% or less, and
Ni: 1.00% or less.

The optional elements may be contained according to a known purpose, a lower limit of the optional elements does not need to be limited, and the lower limit may be 0%.

The chemical composition of the slab may be measured by the above analytical methods, as with the chemical composition of the grain oriented electrical steel sheet as the final product.

(Hot Rolling Process)

In the hot rolling process, the slab is heated to a predetermined temperature (for instance, 1100 to 1400°C), and then, is subjected to hot rolling in order to obtain a hot rolled steel sheet. In the hot rolling process, for instance, the silicon steel material (slab) is heated in heating stage, is rough-rolled, and then, is final-rolled in order to obtain the hot rolled steel sheet with a predetermined thickness, for instance, 1.8 to 3.5 mm. After finishing the final rolling, the hot rolled steel sheet is coiled at a predetermined temperature.

In a case where of a process including the nitridation during decarburization annealing or after decarburization annealing, the inhibitor intensity as MnS is not necessarily needed, it is preferable that the slab heating temperature is 1100 to 1280°C from the productivity standpoint.

(Hot-Band Annealing Process)

In the hot band annealing process, the hot rolled steel sheet after the hot rolling process is annealed under predetermined conditions (for instance, 750 to 1200°C for 30 seconds to 10 minutes) in order to obtain a hot band annealed sheet. The hot-band annealing is generally performed to control the microstructure of the steel sheet such as the recrystallization fraction, the residual strain, and the grain size by annealing the hot-rolled steel sheet after the hot rolling process and to preferably control the morphology of precipitates in the steel. For instance, in high temperature slab heating process, the above process is to finally control the morphology of precipitates such as AlN, and the conditions are controlled so that the precipitates are uniformly and finely precipitated. For instance, as the hot band annealing, the steel sheet may be heated to 1050°C to 1150°C, may be slow-cooled to an intermediate temperature (850°C to 950°C) for 50 to 150 seconds in order to appropriately precipitates AlN and the like, and thereafter, may be water-cooled.

(Cold Rolling Process)

In the cold rolling process, the hot band annealed sheet after the hot band annealing process is cold-rolled once or is cold-rolled plural times (two times or more) with an annealing (intermediate annealing) (for instance, 80 to 95% of total cold reduction) in order to obtain a cold rolled steel sheet with a thickness, for instance, 0.10 to 0.50 mm. In order to improve the magnetic characteristics, for instance, an interpass temperature of the cold rolling may be approximately 100°C to 300°C.

The total cold reduction of cold rolling is defined as follows.

Total cold reduction (%) = ( 1 - Thickness of steel sheet after cold rolling / Thickness of steel sheet before cold rolling ) $\times$ 100

(Local Rapid Heating Process)

In the present embodiment, local rapid heating for forming the locally heated region is performed on the cold-rolled steel sheet after the cold rolling process. The rapid heating method is not particularly limited as long as the steel sheet can be locally heated. For instance, it is possible to adopt a method in which spot electrodes are arranged and contacted on both surfaces of the steel sheet and the steel sheet is heated by flowing a current in the steel sheet, a method in which the steel sheet is heated by irradiating the surface thereof with laser beam, electron beam, and the like, a method in which the steel sheet is locally heated by induction heating, a method in which the steel sheet is heated by contacting a heated piece, and the like. The size of each locally heated region may be a dotted region having a diameter of approximately 10 $\mu$m to 10 mm or a linear region having a width of approximately 10 $\mu$m to 10 mm. In addition, the electrode used for electric heating may be a circular electrode or a linear electrode as described above.

Note that regarding the size of the locally heated region, the minimum diameter and the minimum width depend on the shape of the spot electrode and the technique of reducing the focusing diameter of the laser beam or the electron beam. Although it is possible in principle to further reduce the size of the locally heated region, it is considered that the effect can be obtained when the size of the locally heated region is 1 $\mu$m or more in consideration of the fact that the nucleus of the recrystallized grain has a size of approximately 1 $\mu$m under the present conditions. From an industrial standpoint, the minimum diameter and the minimum width may be 10 $\mu$m or more. In addition, with respect to the size of the locally heated region, when the maximum diameter or the maximum width exceeds 10 mm, the area fraction of the Goss-oriented grains having relatively large angular deviation $\theta$ or angular deviation $\phi$ that cannot grow out of the locally heated region increases. In this case, it is difficult to obtain the effect of performing local rapid heating.

In the local rapid heating, the heating rate may be 500 °C/sec or more at a central position of the locally heated region as viewed in the thickness direction and at a thickness 1/5 position of the steel sheet. When the heating rate is 500 °C/sec or more at the above region, the microstructure of the locally heated region can be preferably controlled to a recovered structure or a recrystallized structure. The heating rate is preferably 2000 °C/sec or more, and more preferably 10000 °C/sec or more. On the other hand, the upper limit of the heating rate is not particularly limited, and the upper limit may be, for instance, 1000000 °C/sec.

In addition, it is preferable that the heating rate is comprehensively and inseparably controlled with the heating rate during decarburization annealing described below. For instance, in the present embodiment, although the coarse Goss-oriented grains in the local heating affected region is intended to exist after the decarburization annealing, it is difficult to achieve the above intension when the heating rate during decarburization annealing is faster than the heating rate during local rapid heating. Therefore, although depending on the degree of the value of the heating rate, the heating rate during local rapid heating is preferably equal to or more than the heating rate during decarburization annealing. A person skilled in the art can preferably control the heating rate during local rapid heating and the heating rate during decarburization annealing if a person skilled in the art understands the purpose of making the coarse Goss-oriented grains to exist in the local heating affected region after decarburization annealing.

Herein, the thickness 1/5 position of the steel sheet indicates a depth corresponding to 1/5 of the thickness of the steel sheet from the surface of the steel sheet along the thickness direction.

In addition, in the local rapid heating, the maximum attained temperature may be 700°C or more at the central position of the locally heated region as viewed in the thickness direction and at the thickness 1/5 position of the steel sheet. When the maximum attained temperature is 700°C or more in the above region, the microstructure of the locally heated region can be preferably controlled to the recovered structure or the recrystallized structure. The maximum attained temperature is preferably 800°C or higher, and more preferably 900°C or higher. On the other hand, the maximum attained temperature may be equal to or lower than the melting point of the steel sheet, and may be, for instance, 1400°C or lower.

In addition, in the local rapid heating, the holding time from reaching the maximum temperature until cooling to 700°C may be 0.1 seconds or more at the central position of the locally heated region as viewed in the thickness direction and at the thickness 1/5 position of the steel sheet. When the holding time is 0.1 seconds or more in the above region, the microstructure of the locally heated region can be preferably controlled to the recovered structure or the recrystallized structure. The holding time is preferably 0.2 seconds or more, more preferably 0.3 seconds or more, and still more preferably 0.4 seconds or more. On the other hand, the upper limit of the holding time is not particularly limited, and the upper limit may be, for instance, 10 seconds or less. The holding time from reaching the maximum temperature until cooling to 700°C has essentially affected the formation of the coarse Goss-oriented grains close to the ideal Goss orientation.

In the local rapid heating, it is important to control the above holding time in addition to the heating rate and the maximum attained temperature described above. During this holding time, it is possible to form a sub-grain structure or a recrystallized nucleus, which is advantageous for the formation of the coarse Goss-oriented grains in the locally heated region. By controlling the sub-grain structure in the locally heated region through the holding time, it is possible to preferably control the microstructure in the subsequent process.

As described above, the method of local rapid heating is not particularly limited. For instance, local rapid heating may be performed by spot electric heating, laser irradiation, or electron beam irradiation. Any local rapid heating method may be controlled so as to satisfy the heating rate, the maximum attained temperature, and the holding time described above. A person skilled in the art can combine the conditions of the local rapid heating, and thereby, can control the heating rate, maximum attained temperature, and holding time according to the purpose.

For instance, a person skilled in the art can control the heating rate and the maximum attained temperature at the central position of the locally heated region as viewed in the thickness direction and at the thickness 1/5 position of the steel sheet by performing thermal conductivity analysis using finite element method. Additionally, a person skilled in the art can control the above holding time by controlling conditions of heat dissipation after reaching the maximum temperature. For instance, in the case of spot electric heating, the electrode retention time after current flow may be controlled, or the shape of the spot electrode may be changed to a shape suitable for heat dissipation. In addition, in the case of laser irradiation or electron beam irradiation, the irradiation speed may be adjusted, or the shape of irradiated region may be changed to an ellipse and the like to add a gradient to the irradiation energy from the central region toward the outer edge region in irradiated region.

In general, in heating by laser irradiation, only the vicinity of the irradiated sheet surface is preferentially heated, and the inside of the steel sheet is hardly heated. In addition, since heating by laser irradiation is non-contact heating, heat dissipation after heating is fast, and it is difficult to hold the temperature. Therefore, when heating by laser irradiation is performed as the local rapid heating, in order to recover or recrystallize the cold-deformed structure in the laser-irradiated region, it is necessary to perform heating under a condition of heating not only the sheet surface but also the inside of the steel sheet and under a condition of relatively coarsening the sub-grain structure in the laser-irradiated region by slowing the cooling rate. The condition of laser irradiation for performing the local rapid heating is quite different from the condition of laser irradiation for performing the magnetic domain refinement. For instance, even if the condition of laser irradiation for performing magnetic domain refinement (usually 0.5 to 50 mJ/mm$^2$) is applied to the present embodiment, the microstructure of the locally heated region cannot be controlled in a preferable one, and the coarse Goss-oriented grains close to the ideal Goss orientation are not formed in the steel sheet after the decarburization annealing process. In addition, the situation with electron beam irradiation is the same as with laser irradiation. Even if the condition of electron beam irradiation for performing magnetic domain refinement is applied to the present embodiment, the microstructure of the locally heated region cannot be controlled in a preferable one, and the coarse Goss-oriented grains close to the ideal Goss orientation are not formed in the steel sheet after the decarburization annealing process.

Note that, even when the input power of laser irradiation or electron beam irradiation is simply increased, it is difficult to form the coarse Goss-oriented grains close to the ideal Goss orientation. For instance, when the rapid heating is performed by laser irradiation or electron beam irradiation, it is preferable to make the beam shape elliptical or control the scan speed and the like in order to secure a temperature range where the grains in the region grow after the rapid heating.

Conventionally, in an electrical steel sheet, laser irradiation and electron beam irradiation have been performed to reduce the iron loss by performing magnetic domain control on the steel sheet after secondary recrystallization. Under conditions of these laser irradiation and electron beam irradiation, since approximately 20 $\mu$m from the surface of the steel sheet is heated, heat dissipation after heating is fast. Therefore, under the conventional conditions, it is difficult to secure the holding time from reaching the maximum temperature until cooling to 700°C as described above. That is, under the conditions of conventional laser irradiation and electron beam irradiation, it may be possible to make the irradiated region act as a barrier for the growth of the secondary recrystallized grains, but it is difficult to form the coarse Goss-oriented grains having the orientation close to the ideal Goss orientation as in the present embodiment. In order to form the coarse Goss-oriented grains close to the ideal Goss orientation by laser irradiation or electron beam irradiation, it is necessary to investigate conditions of laser irradiation or electron beam irradiation as described above.

(Decarburization Annealing Process)

In the decarburization annealing process, the cold-rolled steel sheet after the local rapid heating process is subjected to decarburization annealing (primary annealing). By this decarburization annealing, the existence frequency of the Goss-oriented grains formed in the local heating affected region is increased, the grain size of the Goss-oriented grains is increased, and the coarse Goss-oriented grains having the orientation close to the ideal Goss orientation are preferably formed. As conditions of the decarburization annealing, the heating rate may be 10 to 10000 °C/sec, the annealing temperature may be 700 to 900°C, and the annealing time may be 10 to 600 seconds. In addition, by performing decarburization annealing on the cold-rolled steel sheet, C included in the cold-rolled steel sheet is removed. In order to remove "C" included in the cold rolled steel sheet, it is preferable that the decarburization annealing is conducted in moist atmosphere.

In addition, it is effective to reduce the primary recrystallized grain size by controlling the conditions of the hot rolling and hot-band annealing described above and by decreasing the decarburization annealing temperature as necessary. The primary recrystallized grain size is not particularly limited but is preferably 8 to 30 $\mu$m.

In addition, in the present embodiment, a large number of the coarse Goss-oriented grains having the orientation close to the ideal Goss orientation are formed in the local heating affected region. Therefore, it is not necessary to form the Goss-oriented grains again by decarburization annealing. The heating rate of the decarburization annealing may be 10000 °C/sec or less as described above, but it is preferable to decrease the heating rate of the decarburization annealing in order to form {111}<112> oriented grains or {411}<148> oriented grains that are easily encroached in the matrix region (local heating non-affected region). For instance, the heating rate of the decarburization annealing is preferably 300 °C/sec or less, more preferably 200 °C/sec or less, and still more preferably 100 °C/sec or less.

In addition, the amount of oxidation caused by the decarburization annealing and the state of surface oxidized layer affect the formation of the glass film. Therefore, in the decarburization annealing, the oxidation degree ($PH_2O/PH_2$) in the annealing atmosphere (furnace atmosphere) may be 0.01 to 0.15. Herein, the oxidation degree $PH_2O/PH_2$ is defined as the ratio of water vapor partial pressure $PH_2O$ to hydrogen partial pressure $PH_2$ in the atmosphere.

Through the above processes, the decarburization-annealed steel sheet for the grain oriented electrical steel sheet according to the present embodiment can be manufactured. In the decarburization-annealed steel sheet according to the present embodiment manufactured comprehensively and inseparably by controlling each condition of each process, the coarse Goss-oriented grains are formed in a preferable form in the steel sheet.

Hereinafter, a method for manufacturing the grain oriented electrical steel sheet using the decarburization-annealed steel sheet according to the present embodiment will be described.

(Nitridation)

Nitridation is a treatment effective in the low temperature slab heating process in which the slab heating temperature is 1280°C or lower, and is an important process for controlling the inhibitor intensity in secondary recrystallization. In the nitridation, the nitrogen content of the steel sheet is made to increase to 40 to 200 ppm from starting the decarburization annealing to starting the secondary recrystallization in the final annealing. For instance, the nitridation may be a treatment of annealing the steel sheet in an atmosphere containing a gas having a nitriding ability such as ammonia, a treatment of final-annealing the decarburization annealed steel sheet being applied an annealing separator containing a powder having a nitriding ability such as MnN and the like. The nitrogen content after the nitridation is preferably 130 to 350 ppm, and more preferably 150 to 250 ppm.

(Annealing Separator Applying Process)

In the annealing separator applying process, the decarburization-annealed steel sheet is applied an annealing separator to. For instance, as the annealing separator, it is possible to use an annealing separator mainly including MgO. The decarburization-annealed steel sheet after applying the annealing separator is coiled and is final-annealed in the subsequent final annealing process.

(Final Annealing Process)

In the final annealing process, the decarburization annealed steel sheet after applying the annealing separator is final-annealed so that the secondary recrystallization (secondary annealing) occurs. In the process, the secondary recrystallization proceeds under conditions such that the grain growth of the primary recrystallized grain is suppressed by the inhibitor. Thereby, the grain having the {110}<001> orientation is preferentially grown, and the magnetic flux density is drastically improved.

The heating rate in the heating stage of the final annealing process is not particularly limited but is preferably 3 to 7°C/hr (°C/hour). In addition, in the final annealing, holding may be performed for 10 hours or more and 60 hours or less in a temperature range of 1000°C or more and 1300°C or less. The atmosphere during final annealing may be, for instance, a nitrogen atmosphere or a mixed atmosphere of nitrogen and hydrogen.

(Insulating Coating Forming Process)

A coating solution including phosphoric acid or phosphate, chromic anhydride or chromate, and colloidal silica is applied to the steel sheet, and is baked (for instance, 350 to 1150°C for 5 to 300 seconds) to form the insulation coating.

(Others)

The grain oriented electrical steel sheet may be subjected to magnetic domain refinement for forming local minute strain or grooves by a known method such as laser, plasma, a mechanical method, or etching as necessary. However, in the grain oriented electrical steel sheet manufactured using the decarburization-annealed steel sheet according to the present embodiment, coarsening of the secondary recrystallized grain size is suppressed even though the magnetic flux density is excellent, and thus, the magnetic domains are refined without performing magnetic domain refinement treatment.

Example 1

Hereinafter, the effects of the present invention are described in detail with reference to the following examples. However, the condition in the examples is an example condition employed to confirm the operability and the effects of the present invention, so that the present invention is not limited to the example condition. The present invention can employ various types of conditions as long as the conditions do not depart from the scope of the present invention and can achieve the object of the present invention.

Using slabs having adjusted chemical composition as materials, decarburization-annealed steel sheets with chemical composition shown in Table 2A were manufactured. The chemical composition was measured by the above-mentioned methods. In Table 2, "-" indicates that the control and manufacturing conscious of content did not perform and thus, the content was not measured.

When the decarburization-annealed steel sheets were manufactured, the slabs were heated to 1150°C, and then hot-rolled to obtain the hot rolled steel sheets having the thickness of 2.6 mm. The hot rolled steel sheets were subjected to the hot band annealing in which the annealing was conducted at 1100°C and then at 900°C, and then were pickled in order to remove the surface scale. The steel sheets were cold-rolled once or cold-rolled plural times with the intermediate annealing to obtain the cold rolled steel sheets having the final thickness of 0.22 mm.

The cold-rolled steel sheets were subjected to local rapid heating under conditions shown in Tables 3 to 6. For spot electric heating, copper electrodes having a diameter of 1 mm which corresponds to contact area with the steel sheet were used, and then, the heating rate, the maximum attained temperature, the holding time from reaching the maximum temperature until cooling to 700°C (holding time above 700°C) were respectively controlled by comprehensively adjusting the electrode shape other than the contact area with the steel sheet, the electrode force, the flowing current, the time of current flow, the electrode retention time after current flow, and the like. For laser heating, fiber laser was used, focusing spot diameter of laser beam in the rolling direction (specifically, diameter including 86% of laser output) was to be 30 $\mu$m (except for Test Nos. 43 and 44), and then, the heating rate, the maximum attained temperature, the holding time above 700°C were respectively controlled by comprehensively adjusting the energy density of laser irradiation, the laser scanning speed, the shape of laser irradiated region, and the like. A person skilled in the art can combine the conditions of the local rapid heating, and thereby, can control the heating rate, the maximum attained temperature, and the holding time above 700°C according to the purpose.

Note that, in Test No. 41, the laser beam was elongated along scanning direction, and thereby, the holding time from reaching the maximum temperature until cooling to 700°C was controlled to 0.2 seconds in the local rapid heating, in order to form the coarse Goss-oriented grains having the orientation close to the ideal Goss orientation in the locally heated region. In Test No. 42, the general condition of laser irradiation for performing the magnetic domain refinement was applied. In Test No. 43, the focusing spot diameter was 0.5mm, and the energy density of laser irradiation was 2.0 J/mm$^2$, in order to control the irradiated region of laser beam to be finally the grain boundary of the secondary recrystallization. In Test No. 44, the focusing spot diameter was 0.5mm, and the energy density of laser irradiation was 30.0 J/mm$^2$, in order to control the irradiated region of laser beam to be finally the grain boundary of the secondary recrystallization.

In the tables, "Not performed" of heating method of local rapid heating indicates that the local rapid heating was not performed. "Linear or Dotted" of local heating condition indicates the shape of the locally heated region on the surface of the cold-rolled steel sheet, and "Spacing in rolling direction" and "Spacing in width direction" of local heating condition indicates the spacing in the rolling direction and the transverse direction in which the locally heated regions were arranged on the surface of the cold-rolled steel sheet. The locally heated regions were uniformly arranged at even spacing in the rolling direction and the transverse direction. For instance, when both "Spacing in rolling direction" and "Spacing in width direction" are 100 mm or less, the locally heated regions were arranged in all the divided domains. On the other hand, when either "Spacing in rolling direction" or "Spacing in width direction" is more than 100 mm, the divided domain where the locally heated region was not arranged existed. Herein, among all the divided domains, the divided domains where the locally heated region was arranged were arranged so that the distribution was not uneven.

The cold-rolled steel sheets after the local rapid heating were subjected to decarburization annealing under the conditions shown in Tables 3 to 6. Herein, in the decarburization annealing, the oxidation degree ($PH_2O/PH_2$) in the annealing atmosphere (furnace atmosphere) was 0.13.

For the manufactured decarburization-annealed steel sheet, the area fraction of the divided sub-domain group I in the area of the divided domain, the value of $A^I_{GOSS} \div aveA_{GOSS}$, and the area fraction of the CSL oriented grains included in the divided sub-domain group II in the area of the divided sub-domain group II were measured by the above-mentioned methods. The results are indicated in Tables 7 to 10.

The manufactured decarburization-annealed steel sheet was subjected to nitridation at 750°C in nitrogen-hydrogen-ammonia atmosphere, and the nitrogen content of the steel sheet was to be 220 ppm. Thereafter, the annealing separator including MgO as a main component was applied and the final annealing was performed. In the final annealing, the steel sheet was heated to 1000°C at 15°C/hr (°C/hour) in a mixed atmosphere of hydrogen and nitrogen, heated to 1200°C at heating rates shown in Tables 3 to 6, and then, held at 1200°C - 20hr (hour) in a hydrogen atmosphere.

For the steel sheet after the final annealing, the coating solution for forming insulation coating which mainly included the phosphate and the colloidal silica and which included the chromic anhydride as necessary was applied and baked to form the insulating coating.

Various features of the obtained grain oriented electrical steel sheet were evaluated. The evaluation results are shown in Tables 7 to 10. Also, the chemical compositions of base steel sheet of the obtained grain oriented electrical steel sheet was measured. The results are shown in Table 11.

(1) Secondary Recrystallized Grain Size of Grain Oriented Electrical Steel Sheet

The secondary recrystallized grain size of the grain oriented electrical steel sheet was measured on the basis of an intercept method regulated by JIS G 0551:2020. As the above secondary recrystallized grain size, the secondary recrystallized grain size (average grain size) in the rolling direction was measured. When the secondary recrystallized grain size (average grain size) in the rolling direction was 65 $\mu$m or less, it was judged to as acceptable.

(2) Magnetic Characteristics of Grain Oriented Electrical Steel Sheet

The magnetic characteristics of the grain oriented electrical steel sheet were measured based on the single sheet tester (SST) method regulated by JIS C 2556: 2015.

The samples of 20 sheets with a size of 100 mm $\times$ 500 mm for the single sheet tester were taken from the obtained grain oriented electrical steel sheets, and then, the single sheet test was performed. As the magnetic characteristics, the magnetic flux density $B_8$ (T) in the rolling direction of the steel sheet was measured under the condition such that the steel sheet was excited at 800 A/m. When the magnetic flux density $B_8$ was 1.925T or more, it was judged to as acceptable. Moreover, for reference, the iron loss $W_{17/50}$ (W/kg) which was defined as the power loss per unit weight (1 kg) of the steel sheet was measured under the conditions of 50 Hz of AC frequency and 1.7 T of excited magnetic flux density.

In the decarburization-annealed steel sheets which were the inventive examples among Nos. 1 to 84, the area fraction of the divided sub-domain group I in the area of the divided domain and the value of $A^I_{GOSS} \div aveA_{GOSS}$ was favorably controlled. These inventive examples showed excellent magnetic flux density even though coarsening of the secondary recrystallized grain size was suppressed as the grain oriented electrical steel sheet. In addition, since coarsening of the secondary recrystallized grain size was suppressed, these inventive examples also showed excellent iron loss and magnetostriction.

On the other hand, in the decarburization-annealed steel sheets which were the comparative examples among Nos. 1 to 84, the area fraction of the divided sub-domain group I in the area of the divided domain and the value of $A^I_{GOSS} \div$

aveA$_{GOSS}$ was not favorably controlled. In these comparative examples, excellent magnetic flux density was not obtained as the grain oriented electrical steel sheet.

[Table 2]

MANUFACTURING RESULTS — CHEMICAL COMPOSITION OF DECARBURIZATION-ANNEALED STEEL SHEET (IN UNITS OF mass%, BALANCE: Fe AND IMPURITIES)

| STEEL TYPE | C | Si | Mn | S | Se | Al | N | Nb | V | Mo | Ta | W | Cu | Bi | B | P | Ti | Sn | Sb | Cr | Ni |
|---|---|---|---|---|---|---|---|---|---|---|---|---|---|---|---|---|---|---|---|---|---|
| A | 0.001 | 3.35 | 0.10 | 0.006 | – | 0.026 | 0.008 | – | – | – | – | – | – | – | – | – | – | – | – | – | – |
| B | 0.001 | 3.35 | 0.10 | 0.006 | – | 0.026 | 0.008 | 0.005 | – | – | – | – | – | – | – | – | – | – | – | – | – |
| C | 0.001 | 3.35 | 0.12 | 0.006 | – | 0.032 | 0.008 | – | – | – | – | – | – | – | – | – | – | – | – | – | – |
| D | 0.001 | 3.35 | 0.08 | 0.006 | – | 0.025 | 0.008 | – | – | – | – | – | – | – | – | – | – | – | – | – | – |
| E | 0.001 | 3.35 | 0.10 | 0.006 | – | 0.026 | 0.008 | 0.001 | – | – | – | – | – | – | – | – | – | – | – | – | – |
| F | 0.001 | 3.35 | 0.10 | 0.006 | – | 0.026 | 0.008 | 0.003 | – | – | – | – | – | – | – | – | – | – | – | – | – |
| G | 0.001 | 3.35 | 0.10 | 0.006 | – | 0.026 | 0.008 | 0.010 | – | – | – | – | – | – | – | – | – | – | – | – | – |
| H | 0.001 | 3.35 | 0.10 | 0.006 | – | 0.026 | 0.008 | 0.020 | – | – | – | – | – | – | – | – | – | – | – | – | – |
| I | 0.001 | 3.35 | 0.10 | 0.006 | – | 0.026 | 0.008 | 0.030 | – | – | – | – | – | – | – | – | – | – | – | – | – |
| J | 0.001 | 3.35 | 0.10 | 0.006 | – | 0.026 | 0.008 | 0.050 | – | – | – | – | – | – | – | – | – | – | – | – | – |
| K | 0.001 | 3.35 | 0.10 | 0.006 | 0.001 | 0.026 | 0.008 | 0.005 | – | – | – | – | – | – | – | – | – | – | – | – | – |
| L | 0.001 | 3.35 | 0.10 | 0.006 | – | 0.026 | 0.008 | – | 0.007 | – | – | – | – | – | – | – | – | – | – | – | – |
| M | 0.001 | 3.35 | 0.10 | 0.006 | – | 0.026 | 0.008 | – | – | 0.020 | – | – | – | – | – | – | – | – | – | – | – |
| N | 0.001 | 3.35 | 0.10 | 0.006 | – | 0.026 | 0.008 | – | – | – | 0.003 | 0.010 | – | – | – | – | – | – | – | – | – |
| O | 0.001 | 3.35 | 0.10 | 0.007 | – | 0.026 | 0.008 | – | – | – | 0.003 | – | – | – | – | – | – | – | – | – | – |
| P | 0.001 | 3.25 | 0.10 | 0.007 | – | 0.026 | 0.008 | 0.005 | 0.003 | – | – | – | 0.07 | – | – | – | – | – | – | – | – |
| Q | 0.001 | 3.25 | 0.10 | 0.007 | – | 0.026 | 0.008 | 0.005 | – | – | – | – | 0.07 | 0.002 | – | – | – | – | – | – | – |
| R | 0.001 | 3.25 | 0.10 | 0.007 | – | 0.026 | 0.008 | 0.005 | – | – | – | – | 0.02 | – | 0.002 | – | – | – | – | – | – |
| S | 0.001 | 3.25 | 0.10 | 0.007 | – | 0.026 | 0.008 | 0.005 | – | – | – | – | 0.02 | – | – | 0.015 | – | – | – | – | – |
| T | 0.001 | 3.25 | 0.10 | 0.007 | – | 0.026 | 0.008 | 0.005 | – | – | – | – | 0.02 | – | – | – | – | – | – | – | – |
| U | 0.001 | 3.25 | 0.10 | 0.007 | – | 0.026 | 0.008 | 0.005 | – | – | – | – | 0.02 | – | – | – | 0.006 | 0.060 | – | – | – |
| V | 0.001 | 3.25 | 0.10 | 0.007 | – | 0.026 | 0.008 | 0.005 | – | – | – | – | 0.02 | – | – | – | – | – | – | – | – |
| W | 0.001 | 3.25 | 0.10 | 0.007 | – | 0.026 | 0.008 | 0.005 | – | – | – | – | 0.02 | – | – | – | – | – | 0.023 | – | – |
| X | 0.001 | 3.25 | 0.10 | 0.007 | – | 0.026 | 0.008 | 0.005 | – | – | – | – | 0.02 | – | – | – | – | – | – | 0.120 | – |
| Y | 0.001 | 3.50 | 0.10 | 0.006 | – | 0.026 | 0.008 | 0.005 | – | – | – | – | 0.20 | – | – | 0.021 | 0.002 | 0.060 | – | 0.100 | 0.030 |
| Z | 0.001 | 3.45 | 0.10 | 0.006 | – | 0.026 | 0.008 | – | – | – | – | – | 0.20 | – | – | – | – | – | – | – | – |

[Table 3]

| No. | STEEL TYPE | MANUFACTURING CONDITIONS | | | | | | | | | | | |
|---|---|---|---|---|---|---|---|---|---|---|---|---|---|
| | | TOTAL COLD REDUCTION OF COLD ROLLING | LOCAL RAPID HEATING | | | | | | | DECARBURIZATION ANNEALING | | | FINAL ANNEALING |
| | | | HEATING METHOD | HEATING RATE | MAXIMUM ATTAINED TEMPERATURE | HOLDING TIME ABOVE 700°C | LOCAL HEATING CONDITION | | | HEATING RATE | ANNEALING TEMPERATURE | ANNEALING TIME | HEATING RATE |
| | | | | | | | LINEAR OR DOTTED | SPACING IN ROLLING DIRECTION | SPACING IN WIDTH DIRECTION | | | | |
| | | % | | °C/sec | °C | sec | | mm | mm | °C/sec | °C | sec | °C/hr |
| 1 | A | 91.5 | NOT PERFORMED' | - | - | - | - | - | - | 10000 | 830 | 90 | 10 |
| 2 | A | 91.5 | NOT PERFORMED | - | - | - | - | - | - | 2000 | 830 | 90 | 10 |
| 3 | A | 91.5 | NOT PERFORMED | - | - | - | - | - | - | 500 | 830 | 90 | 10 |
| 4 | A | 91.5 | NOT PERFORMED | - | - | - | - | - | - | 300 | 830 | 90 | 10 |
| 5 | A | 91.5 | NOT PERFORMED | - | - | - | - | - | - | 100 | 830 | 90 | 10 |
| 6 | A | 91.5 | SPOT ELECTRIC | 500 | 900 | 0.3 | DOTTED | 100 | 100 | 10000 | 830 | 90 | 10 |
| 7 | A | 91.5 | SPOT ELECTRIC | 500 | 900 | 0.3 | DOTTED | 100 | 100 | 2000 | 830 | 90 | 10 |
| 8 | A | 91.5 | SPOT ELECTRIC | 500 | 900 | 0.3 | DOTTED | 100 | 100 | 500 | 830 | 90 | 10 |
| 9 | A | 91.5 | SPOT ELECTRIC | 500 | 900 | 0.3 | DOTTED | 100 | 100 | 300 | 830 | 90 | 10 |
| 10 | A | 91.5 | SPOT ELECTRIC | 500 | 900 | 0.3 | DOTTED | 100 | 100 | 100 | 830 | 90 | 10 |
| 11 | A | 91.5 | SPOT ELECTRIC | 2000 | 900 | 0.3 | DOTTED | 100 | 100 | 10000 | 830 | 90 | 10 |
| 12 | A | 91.5 | SPOT ELECTRIC | 2000 | 900 | 0.3 | DOTTED | 100 | 100 | 2000 | 830 | 90 | 10 |

| No. | STEEL TYPE | MANUFACTURING CONDITIONS | | | | | | | | | | |
| --- | --- | --- | --- | --- | --- | --- | --- | --- | --- | --- | --- | --- |
| | | TOTAL COLD REDUCTION OF COLD ROLLING | LOCAL RAPID HEATING | | | | | | | DECARBURIZATION ANNEALING | | | FINAL ANNEALING |
| | | | HEATING METHOD | HEATING RATE | MAXIMUM ATTAINED TEMPERATURE | HOLDING TIME ABOVE 700°C | LOCAL HEATING CONDITION | | | HEATING RATE | ANNEALING TEMPERATURE | ANNEALING TIME | HEATING RATE |
| | | | | | | | LINEAR OR DOTTED | SPACING IN ROLLING DIRECTION | SPACING IN WIDTH DIRECTION | | | | |
| | | % | | °C/sec | °C | sec | | mm | mm | °C/sec | °C | sec | °C/hr |
| 13 | A | 91.5 | SPOT ELECTRIC | 2000 | 900 | 0.3 | DOTTED | 100 | 100 | 500 | 830 | 90 | 10 |
| 14 | A | 91.5 | SPOT ELECTRIC | 2000 | 900 | 0.3 | DOTTED | 100 | 100 | 300 | 830 | 90 | 10 |
| 15 | A | 91.5 | SPOT ELECTRIC | 2000 | 900 | 0.3 | DOTTED | 100 | 100 | 100 | 830 | 90 | 10 |
| 16 | A | 91.5 | SPOT ELECTRIC | 10000 | 900 | 0.3 | DOTTED | 100 | 100 | 10000 | 830 | 90 | 10 |
| 17 | A | 91.5 | SPOT ELECTRIC | 10000 | 900 | 0.3 | DOTTED | 100 | 100 | 2000 | 830 | 90 | 10 |
| 18 | A | 91.5 | SPOT ELECTRIC | 10000 | 900 | 0.3 | DOTTED | 100 | 100 | 500 | 830 | 90 | 10 |
| 19 | A | 91.5 | SPOT ELECTRIC | 10000 | 900 | 0.3 | DOTTED | 100 | 100 | 300 | 830 | 90 | 10 |
| 20 | A | 91.5 | SPOT ELECTRIC | 10000 | 900 | 0.3 | DOTTED | 100 | 100 | 100 | 830 | 90 | 10 |
| 21 | A | 91.5 | SPOT ELECTRIC | 500 | 900 | 0.3 | DOTTED | 100 | 100 | 300 | 830 | 90 | 5 |

EP 4 737 604 A1

[Table 4]

| No. | STEEL TYPE | MANUFACTURING CONDITIONS | | | | | | | | | | | |
| --- | --- | --- | --- | --- | --- | --- | --- | --- | --- | --- | --- | --- | --- |
| | | TOTAL COLD REDUCTION OF COLD ROLLING | LOCAL RAPID HEATING | | | | | | | DECARBURIZATION ANNEALING | | | FINAL ANNEALING |
| | | | HEATING METHOD | HEATING RATE | MAXIMUM ATTAINED TEMPERATURE | HOLDING TIME ABOVE 700°C | LOCAL HEATING CONDITION | | | HEATING RATE | ANNEALING TEMPERATURE | ANNEALING TIME | HEATING RATE |
| | | | | | | | LINEAR OR DOTTED | SPACING IN ROLLING DIRECTION | SPACING IN WIDTH DIRECTION | | | | |
| | | % | | °C/sec | °C | sec | | mm | mm | °C/sec | °C | sec | °C/hr |
| 22 | A | 91.5 | SPOT ELECTRIC | 500 | 900 | 0.3 | DOTTED | 100 | 100 | 100 | 830 | 90 | 5 |
| 23 | A | 91.5 | SPOT ELECTRIC | 2000 | 900 | 0.3 | DOTTED | 100 | 100 | 2000 | 830 | 90 | 5 |
| 24 | A | 91.5 | SPOT ELECTRIC | 2000 | 900 | 0.3 | DOTTED | 100 | 100 | 500 | 830 | 90 | 5 |
| 25 | A | 91.5 | SPOT ELECTRIC | 2000 | 900 | 0.3 | DOTTED | 100 | 100 | 300 | 830 | 90 | 5 |
| 26 | A | 91.5 | SPOT ELECTRIC | 2000 | 900 | 0.3 | DOTTED | 100 | 100 | 100 | 830 | 90 | 5 |
| 27 | A | 91.5 | SPOT ELECTRIC | 10000 | 900 | 0.3 | DOTTED | 100 | 100 | 10000 | 830 | 90 | 5 |
| 28 | A | 91.5 | SPOT ELECTRIC | 10000 | 900 | 0.3 | DOTTED | 100 | 100 | 2000 | 830 | 90 | 5 |
| 29 | A | 91.5 | SPOT ELECTRIC | 10000 | 900 | 0.3 | DOTTED | 100 | 100 | 500 | 830 | 90 | 5 |
| 30 | A | 91.5 | SPOT ELECTRIC | 10000 | 900 | 0.3 | DOTTED | 100 | 100 | 300 | 830 | 90 | 5 |
| 31 | A | 91.5 | SPOT ELECTRIC | 10000 | 900 | 0.3 | DOTTED | 100 | 100 | 100 | 830 | 90 | 5 |
| 32 | A | 91.5 | SPOT ELECTRIC | 10000 | 900 | 0.3 | DOTTED | 100 | 30 | 100 | 830 | 90 | 5 |
| 33 | A | 91.5 | SPOT ELECTRIC | 10000 | 900 | 0.3 | DOTTED | 60 | 30 | 100 | 830 | 90 | 5 |

EP 4 737 604 A1

(continued)

| No. | STEEL TYPE | MANUFACTURING CONDITIONS | | | | | | | | | | | |
|---|---|---|---|---|---|---|---|---|---|---|---|---|---|
| | | TOTAL COLD REDUCTION OF COLD ROLLING | LOCAL RAPID HEATING | | | | | | | DECARBURIZATION ANNEALING | | | FINAL ANNEALING |
| | | | HEATING METHOD | HEATING RATE | MAXIMUM ATTAINED TEMPERATURE | HOLDING TIME ABOVE 700°C | LOCAL HEATING CONDITION | | | HEATING RATE | ANNEALING TEMPERATURE | ANNEALING TIME | HEATING RATE |
| | | | | | | | LINEAR OR DOTTED | SPACING IN ROLLING DIRECTION | SPACING IN WIDTH DIRECTION | | | | |
| | | % | | °C/sec | °C | sec | | mm | mm | °C/sec | °C | sec | °C/hr |
| 34 | A | 91.5 | SPOT ELECTRIC | 10000 | 900 | 0.3 | DOTTED | 30 | 30 | 100 | 830 | 90 | 5 |
| 35 | A | 91.5 | SPOT ELECTRIC | 10000 | 900 | 0.3 | DOTTED | 20 | 30 | 100 | 830 | 90 | 5 |
| 36 | A | 91.5 | SPOT ELECTRIC | 10000 | 900 | 0.3 | DOTTED | 10 | 30 | 100 | 830 | 90 | 5 |
| 37 | A | 90.4 | SPOT ELECTRIC | 500 | 800 | 0.3 | DOTTED | 100 | 30 | 300 | 850 | 90 | 10 |
| 38 | A | 90.4 | SPOT ELECTRIC | 500 | 800 | 0.2 | DOTTED | 100 | 30 | 300 | 850 | 90 | 10 |
| 39 | A | 90.4 | SPOT ELECTRIC | 500 | 800 | 0.1 | DOTTED | 100 | 30 | 300 | 850 | 90 | 10 |
| 40 | A | 90.4 | SPOT ELECTRIC | 500 | 800 | 0.03 | DOTTED | 100 | 30 | 300 | 850 | 90 | 10 |
| 41 | A | 90.4 | LASER | 2000 | 800 | 0.2 | LINEAR | 10 | - | 300 | 830 | 90 | 10 |
| 42 | A | 90.4 | LASER | < 2000 | <200 | < 0.03 | LINEAR | 10 | - | 300 | 830 | 90 | 10 |

[Table 5]

| No. | STEEL TYPE | MANUFACTURING CONDITIONS | | | | | | | | | | | |
|---|---|---|---|---|---|---|---|---|---|---|---|---|---|
| | | TOTAL COLD REDUCTION OF COLD ROLLING | LOCAL RAPID HEATING | | | | | | | DECARBURIZATION ANNEALING | | | FINAL ANNEALING |
| | | | HEATING METHOD | HEATING RATE | MAXIMUM ATTAINED TEMPERATURE | HOLDING TIME ABOVE 700°C | LOCAL HEATING CONDITION | | | HEATING RATE | ANNEALING TEMPERATURE | ANNEALING TIME | **HEATING** RATE |
| | | | | | | | LINEAR OR DOTTED | SPACING IN ROLLING DIRECTION | SPACING IN WIDTH DIRECTION | | | | |
| | | % | | °C/sec | °C | sec | | mm | mm | °C/sec | °C | sec | °C/hr |
| 43 | A | 90.4 | LASER | 5000 | 800 | <0.03 | LINEAR | 10 | - | 300 | 830 | 90 | 10 |
| 44 | A | 90.4 | LASER | 7000 | 800 | <0.03 | LINEAR | 10 | - | 300 | 830 | 90 | 10 |
| 45 | A | 90.4 | SPOT ELECTRIC | 10000 | 900 | 0.3 | DOTTED | 20 | 20 | 100 | 850 | 90 | 10 |
| 46 | B | 90.4 | SPOT ELECTRIC | 10000 | 900 | 0.3 | DOTTED | 20 | 20 | 100 | 850 | 90 | 10 |
| 47 | C | 90.4 | SPOT ELECTRIC | 10000 | 900 | 0.3 | DOTTED | 20 | 20 | 100 | 850 | 90 | 10 |
| 48 | D | 90.4 | SPOT ELECTRIC | 10000 | 900 | 0.3 | DOTTED | 20 | 20 | 100 | 850 | 90 | 10 |
| 49 | E | 90.4 | SPOT ELECTRIC | 10000 | 900 | 0.3 | DOTTED | 20 | 20 | 100 | 850 | 90 | 10 |
| 50 | F | 90.4 | SPOT ELECTRIC | 10000 | 900 | 0.3 | DOTTED | 20 | 20 | 100 | 850 | 90 | 10 |
| 51 | G | 90.4 | SPOT ELECTRIC | 10000 | 900 | 0.3 | DOTTED | 20 | 20 | 100 | 850 | 90 | 10 |
| 52 | H | 90.4 | SPOT ELECTRIC | 10000 | 900 | 0.3 | DOTTED | 20 | 20 | 100 | 850 | 90 | 10 |
| 53 | I | 90.4 | SPOT ELECTRIC | 10000 | 900 | 0.3 | DOTTED | 20 | 20 | 100 | 850 | 90 | 10 |
| 54 | J | 90.4 | SPOT ELECTRIC | 10000 | 900 | 0.3 | DOTTED | 20 | 20 | 100 | 850 | 90 | 10 |
| 55 | K | 90.4 | SPOT ELECTRIC | 10000 | 900 | 0.3 | DOTTED | 20 | 20 | 100 | 850 | 90 | 10 |

26

| No. | STEEL TYPE | MANUFACTURING CONDITIONS | | | | | | | | | | | |
|---|---|---|---|---|---|---|---|---|---|---|---|---|---|
| | | TOTAL COLD REDUCTION OF COLD ROLLING | LOCAL RAPID HEATING | | | | | | | DECARBURIZATION ANNEALING | | | FINAL ANNEALING |
| | | | HEATING METHOD | HEATING RATE | MAXIMUM ATTAINED TEMPERATURE | HOLDING TIME ABOVE 700°C | LOCAL HEATING CONDITION | | | HEATING RATE | ANNEALING TEMPERATURE | ANNEALING TIME | HEATING RATE |
| | | | | | | | LINEAR OR DOTTED | SPACING IN ROLLING DIRECTION | SPACING IN WIDTH DIRECTION | | | | |
| | | % | | °C/sec | °C | sec | | mm | mm | °C/sec | °C | sec | °C/hr |
| 56 | L | 90.4 | SPOT ELECTRIC | 10000 | 900 | 0.3 | DOTTED | 20 | 20 | 100 | 850 | 90 | 10 |
| 57 | M | 90.4 | SPOT ELECTRIC | 10000 | 900 | 0.3 | DOTTED | 20 | 20 | 100 | 850 | 90 | 10 |
| 58 | N | 90.4 | SPOT ELECTRIC | 10000 | 900 | 0.3 | DOTTED | 20 | 20 | 100 | 850 | 90 | 10 |
| 59 | O | 90.4 | SPOT ELECTRIC | 10000 | 900 | 0.3 | DOTTED | 20 | 20 | 100 | 850 | 90 | 10 |
| 60 | P | 90.4 | SPOT ELECTRIC | 10000 | 900 | 0.3 | DOTTED | 20 | 20 | 100 | 850 | 90 | 10 |
| 61 | Q | 90.4 | SPOT ELECTRIC | 10000 | 900 | 0.3 | DOTTED | 20 | 20 | 100 | 850 | 90 | 10 |
| 62 | R | 90.4 | SPOT ELECTRIC | 10000 | 900 | 0.3 | DOTTED | 20 | 20 | 100 | 850 | 90 | 10 |
| 63 | S | 90.4 | SPOT ELECTRIC | 10000 | 900 | 0.3 | DOTTED | 20 | 20 | 100 | 850 | 90 | 10 |

[Table 6]

| No. | STEEL TYPE | MANUFACTURING CONDITIONS | | | | | | | | | | |
| --- | --- | --- | --- | --- | --- | --- | --- | --- | --- | --- | --- | --- |
| | | TOTAL COLD REDUCTION OF COLD ROLLING | LOCAL RAPID HEATING | | | | | | | DECARBURIZATION ANNEALING | | | FINAL ANNEALING |
| | | | HEATING METHOD | HEATING RATE | MAXIMUM ATTAINED TEMPERATURE | HOLDING TIME ABOVE 700°C | LOCAL HEATING CONDITION | | | HEATING RATE | ANNEALING TEMPERATURE | ANNEALING TIME | HEATING RATE |
| | | | | | | | LINEAR OR DOTTED | SPACING IN ROLLING DIRECTION | SPACING IN WIDTH DIRECTION | | | | |
| | | % | | °C/sec | °C | sec | | mm | mm | °C/sec | °C | sec | °C/hr |
| 64 | T | 90.4 | SPOT ELECTRIC | 10000 | 900 | 0.3 | DOTTED | 20 | 20 | 100 | 850 | 90 | 10 |
| 65 | U | 90.4 | SPOT ELECTRIC | 10000 | 900 | 0.3 | DOTTED | 20 | 20 | 100 | 850 | 90 | 10 |
| 66 | V | 90.4 | SPOT ELECTRIC | 10000 | 900 | 0.3 | DOTTED | 20 | 20 | 100 | 850 | 90 | 10 |
| 67 | W | 90.4 | SPOT ELECTRIC | 10000 | 900 | 0.3 | DOTTED | 20 | 20 | 100 | 850 | 90 | 10 |
| 68 | X | 90.4 | SPOT ELECTRIC | 10000 | 900 | 0.3 | DOTTED | 20 | 20 | 100 | 850 | 90 | 10 |
| 69 | Y | 90.4 | SPOT ELECTRIC | 10000 | 900 | 0.3 | DOTTED | 20 | 20 | 100 | 850 | 90 | 10 |
| 70 | Z | 90.4 | SPOT ELECTRIC | 10000 | 900 | 0.3 | DOTTED | 20 | 20 | 100 | 850 | 90 | 10 |
| 71 | A | 91.5 | SPOT ELECTRIC | 10000 | 800 | 0.2 | DOTTED | 30 | 10 | 50 | 830 | 120 | 10 |
| 72 | A | 91.5 | SPOT ELECTRIC | 20000 | 850 | 0.3 | DOTTED | 30 | 10 | 50 | 830 | 120 | 10 |
| 73 | A | 91.5 | SPOT ELECTRIC | 50000 | 900 | 0.4 | DOTTED | 30 | 10 | 50 | 830 | 120 | 10 |
| 74 | A | 91.5 | SPOT ELECTRIC | 100000 | 950 | 1.0 | DOTTED | 30 | 10 | 50 | 830 | 120 | 10 |
| 75 | A | 91.5 | SPOT ELECTRIC | 500000 | 1000 | 0.8 | DOTTED | 30 | 10 | 50 | 830 | 120 | 10 |
| 76 | Y | 91.5 | LASER | 5000 | 900 | 0.3 | LINEAR | 30 | - | 20 | 860 | 90 | 5 |

EP 4 737 604 A1

| No. | STEEL TYPE | MANUFACTURING CONDITIONS | | | | | | | | | | | |
|---|---|---|---|---|---|---|---|---|---|---|---|---|---|
| | | TOTAL COLD REDUCTION OF COLD ROLLING | LOCAL RAPID HEATING | | | | | | | DECARBURIZATION ANNEALING | | | FINAL ANNEALING |
| | | | HEATING METHOD | HEATING RATE | MAXIMUM ATTAINED TEMPERATURE | HOLDING TIME ABOVE 700°C | LOCAL HEATING CONDITION | | | HEATING RATE | ANNEALING TEMPERATURE | ANNEALING TIME | HEATING RATE |
| | | | | | | | LINEAR OR DOTTED | SPACING IN ROLLING DIRECTION | SPACING IN WIDTH DIRECTION | | | | |
| | | % | | °C/sec | °C | sec | | mm | mm | °C/sec | °C | sec | °C/hr |
| 77 | Y | 91.5 | LASER | 5000 | 900 | 0.3 | LINEAR | 10 | - | 20 | 860 | 90 | 5 |
| 78 | Y | 91.5 | LASER | 5000 | 900 | 0.3 | LINEAR | 5 | - | 20 | 860 | 90 | 5 |
| 79 | Y | 91.5 | LASER | 5000 | 900 | 0.3 | LINEAR | 3 | - | 20 | 860 | 90 | 5 |
| 80 | Y | 91.5 | LASER | 5000 | 900 | 0.3 | LINEAR | 2 | - | 20 | 860 | 90 | 5 |
| 81 | Z | 90.4 | SPOT ELECTRIC | 80000 | 850 | 0.2 | DOTTED | 20 | 20 | 100 | 830 | 120 | 10 |
| 82 | Z | 90.4 | SPOT ELECTRIC | 80000 | 850 | 0.3 | DOTTED | 20 | 20 | 100 | 830 | 120 | 10 |
| 83 | Z | 90.4 | SPOT ELECTRIC | 80000 | 850 | 0.5 | DOTTED | 20 | 20 | 100 | 830 | 120 | 10 |
| 84 | Z | 90.4 | SPOT ELECTRIC | 80000 | 850 | 0.8 | DOTTED | 20 | 20 | 100 | 830 | 120 | 10 |

[Table 7]

| No. | STEEL TYPE | MANUFACTURING RESULTS | | | EVALUATION RESULTS | | | NOTE |
|---|---|---|---|---|---|---|---|---|
| | | AREA FRACTION OF DIVIDED SUB-DOMAIN GROUP I (%) | VALUE OF $A'_{GOSS} \div aveA_{GOSS}$ | AREA FRACTION OF CSL ORIENTATED GRAINS INCLUDED IN DIVIDED SUB-DOMAIN GROUP II (%) | SECONDARY RECRYSTALLIZED GRAIN SIZE (mm) | MAGNETIC FLUX DENSITY $B_8$ (T) | IRON LOSS W17/50 (W/kg) | |
| 1 | A | 0 | - | 13.4 | 10 | 1.905 | 0.848 | COMPARATIVE EXAMPLE |
| 2 | A | 0 | - | 16.2 | 16 | 1.909 | 0.842 | COMPARATIVE EXAMPLE |
| 3 | A | 0 | - | 18.5 | 19 | 1.911 | 0.839 | COMPARATIVE EXAMPLE |
| 4 | A | 0 | - | 19.7 | 20 | 1.913 | 0.834 | COMPARATIVE EXAMPLE |
| 5 | A | 0 | - | 21.3 | 22 | 1.915 | 0.831 | COMPARATIVE EXAMPLE |
| 6 | A | 0 | - | 13.4 | 10 | 1.906 | 0.843 | COMPARATIVE EXAMPLE |
| 7 | A | 0 | - | 16.2 | 16 | 1.911 | 0.839 | COMPARATIVE EXAMPLE |
| 8 | A | 0 | - | 18.5 | 19 | 1.914 | 0.836 | COMPARATIVE EXAMPLE |
| 9 | A | 0.05 | 1.6 | 19.7 | 21 | 1.925 | 0.822 | INVENTIVE EXAMPLE |
| 10 | A | 0.05 | 3.1 | 21.3 | 23 | 1.928 | 0.817 | INVENTIVE EXAMPLE |
| 11 | A | 0 | - | 13.4 | 10 | 1.909 | 0.843 | COMPARATIVE EXAMPLE |
| 12 | A | 0.05 | 1.3 | 16.2 | 16 | 1.926 | 0.816 | INVENTIVE EXAMPLE |
| 13 | A | 0.05 | 2.6 | 18.5 | 20 | 1.928 | 0.814 | INVENTIVE EXAMPLE |
| 14 | A | 0.05 | 3.2 | 19.7 | 21 | 1.930 | 0.812 | INVENTIVE EXAMPLE |
| 15 | A | 0.05 | 6.2 | 21.3 | 23 | 1.932 | 0.809 | INVENTIVE EXAMPLE |
| 16 | A | 0.05 | 1.3 | 13.4 | 10 | 1.928 | 0.800 | INVENTIVE EXAMPLE |
| 17 | A | 0.05 | 2.1 | 16.2 | 17 | 1.932 | 0.792 | INVENTIVE EXAMPLE |
| 18 | A | 0.05 | 4.2 | 18.5 | 20 | 1.934 | 0.788 | INVENTIVE EXAMPLE |
| 19 | A | 0.05 | 5.3 | 19.7 | 21 | 1.937 | 0.782 | INVENTIVE EXAMPLE |
| 20 | A | 0.05 | 10.1 | 21.3 | 24 | 1.940 | 0.776 | INVENTIVE EXAMPLE |
| 21 | A | 0.05 | 1.6 | 19.7 | 29 | 1.938 | 0.796 | INVENTIVE EXAMPLE |

[Table 8]

| No. | STEEL TYPE | MANUFACTURING RESULTS | | | EVALUATION RESULTS | | | NOTE |
|---|---|---|---|---|---|---|---|---|
| | | AREA FRACTION OF DIVIDED SUB-DOMAIN GROUP I % | VALUE OF $A^I_{GOSS} \div aveA_{GOSS}$ | AREA FRACTION OF CSL ORIENTATED GRAINS INCLUDED IN DIVIDED SUB-DOMAIN GROUP II % | SECONDARY RECRYSTALLIZED GRAIN SIZE mm | MAGNETIC FLUX DENSITY $B_8$ T | IRON LOSS W17/50 W/kg | |
| 22 | A | 0.06 | 3.1 | 21.3 | 32 | 1.941 | 0.791 | INVENTIVE EXAMPLE |
| 23 | A | 0.05 | 1.3 | 16.2 | 23 | 1.939 | 0.790 | INVENTIVE EXAMPLE |
| 24 | A | 0.05 | 2.6 | 18.5 | 28 | 1.941 | 0.788 | INVENTIVE EXAMPLE |
| 25 | A | 0.06 | 3.2 | 19.7 | 29 | 1.943 | 0.786 | INVENTIVE EXAMPLE |
| 26 | A | 0.06 | 6.2 | 21.3 | 33 | 1.945 | 0.783 | INVENTIVE EXAMPLE |
| 27 | A | 0.05 | 1.3 | 13.4 | 14 | 1.941 | 0.779 | INVENTIVE EXAMPLE |
| 28 | A | 0.05 | 2.1 | 16.2 | 24 | 1.945 | 0.777 | INVENTIVE EXAMPLE |
| 29 | A | 0.06 | 4.2 | 18.5 | 30 | 1.947 | 0.776 | INVENTIVE EXAMPLE |
| 30 | A | 0.06 | 5.3 | 19.7 | 32 | 1.950 | 0.773 | INVENTIVE EXAMPLE |
| 31 | A | 0.07 | 10.1 | 21.3 | 38 | 1.953 | 0.766 | INVENTIVE EXAMPLE |
| 32 | A | 0.23 | 10.0 | 21.3 | 45 | 1.956 | 0.757 | INVENTIVE EXAMPLE |
| 33 | A | 0.38 | 9.9 | 21.3 | 48 | 1.960 | 0.743 | INVENTIVE EXAMPLE |
| 34 | A | 0.76 | 9.6 | 21.3 | 34 | 1.963 | 0.710 | INVENTIVE EXAMPLE |
| 35 | A | 1.14 | 9.4 | 21.3 | 28 | 1.965 | 0.696 | INVENTIVE EXAMPLE |
| 36 | A | 2.28 | 8.7 | 21.3 | 20 | 1.967 | 0.677 | INVENTIVE EXAMPLE |
| 37 | A | 0.16 | 1.5 | 20.1 | 21 | 1.929 | 0.809 | INVENTIVE EXAMPLE |
| 38 | A | 0.11 | 1.5 | 20.1 | 20 | 1.927 | 0.813 | INVENTIVE EXAMPLE |
| 39 | A | 0.09 | 1.4 | 20.1 | 20 | 1.925 | 0.815 | INVENTIVE EXAMPLE |
| 40 | A | 0.02 | 1.2 | 20.1 | 20 | 1.914 | 0.830 | COMPARATIVE EXAMPLE |
| 41 | A | 9.78 | 2.7 | 19.7 | 9 | 1.938 | 0.674 | INVENTIVE EXAMPLE |
| 42 | A | 0 | - | 19.7 | 20 | 1.909 | 0.841 | COMPARATIVE EXAMPLE |

[Table 9]

| No. | STEEL TYPE | MANUFACTURING RESULTS | | | EVALUATION RESULTS | | | NOTE |
|---|---|---|---|---|---|---|---|---|
| | | AREA FRACTION OF DIVIDED SUB-DOMAIN GROUP I % | VALUE OF $A^I_{GOSS} \div aveA_{GOSS}$ | AREA FRACTION OF CSL ORIENTATED GRAINS INCLUDED IN DIVIDED SUB-DOMAIN GROUP II % | SECONDARY RECRYSTALLIZED GRAIN SIZE mm | MAGNETIC FLUX DENSITY $B_8$ T | IRON LOSS W17/50 W/kg | |
| 43 | A | 4.25 | 1.1 | 19.7 | 14 | 1.911 | 0.822 | COMPARATIVE EXAMPLE |
| 44 | A | 6.50 | 1.2 | 19.7 | 12 | 1.910 | 0.814 | COMPARATIVE EXAMPLE |
| 45 | A | 1.76 | 8.4 | 21.3 | 23 | 1.951 | 0.681 | INVENTIVE EXAMPLE |
| 46 | B | 1.71 | 8.6 | 21.9 | 29 | 1.973 | 0.640 | INVENTIVE EXAMPLE |
| 47 | C | 1.81 | 8.2 | 20.8 | 25 | 1.953 | 0.672 | INVENTIVE EXAMPLE |
| 48 | D | 1.79 | 8.0 | 21.0 | 24 | 1.952 | 0.675 | INVENTIVE EXAMPLE |
| 49 | E | 1.73 | 8.4 | 21.2 | 23 | 1.949 | 0.689 | INVENTIVE EXAMPLE |
| 50 | F | 1.73 | 8.5 | 21.8 | 26 | 1.962 | 0.663 | INVENTIVE EXAMPLE |
| 51 | G | 1.71 | 8.6 | 22.2 | 27 | 1.971 | 0.646 | INVENTIVE EXAMPLE |
| 52 | H | 1.70 | 8.5 | 22.1 | 26 | 1.966 | 0.666 | INVENTIVE EXAMPLE |
| 53 | I | 1.73 | 8.5 | 21.9 | 26 | 1.961 | 0.675 | INVENTIVE EXAMPLE |
| 54 | J | 1.74 | 8.4 | 21.4 | 24 | 1.953 | 0.690 | INVENTIVE EXAMPLE |
| 55 | K | 1.78 | 8.5 | 22.2 | 26 | 1.972 | 0.642 | INVENTIVE EXAMPLE |
| 56 | L | 1.78 | 8.3 | 21.8 | 24 | 1.961 | 0.666 | INVENTIVE EXAMPLE |
| 57 | M | 1.74 | 8.4 | 21.9 | 26 | 1.966 | 0.675 | INVENTIVE EXAMPLE |
| 58 | N | 1.76 | 8.6 | 22.1 | 26 | 1.972 | 0.645 | INVENTIVE EXAMPLE |
| 59 | O | 1.77 | 8.3 | 21.5 | 24 | 1.956 | 0.670 | INVENTIVE EXAMPLE |
| 60 | P | 1.75 | 8.4 | 21.4 | 23 | 1.954 | 0.676 | INVENTIVE EXAMPLE |
| 61 | Q | 1.74 | 8.4 | 21.2 | 22 | 1.951 | 0.679 | INVENTIVE EXAMPLE |
| 62 | R | 1.77 | 8.2 | 20.8 | 22 | 1.949 | 0.693 | INVENTIVE EXAMPLE |
| 63 | S | 1.74 | 8.4 | 21.7 | 25 | 1.963 | 0.660 | INVENTIVE EXAMPLE |

[Table 10]

| No. | STEEL TYPE | MANUFACTURING RESULTS | | | EVALUATION RESULTS | | | NOTE |
|---|---|---|---|---|---|---|---|---|
| | | AREA FRACTION OF DIVIDED SUB-DOMAIN GROUP I % | VALUE OF $A^I_{GOSS} \div aveA_{GOSS}$ | AREA FRACTION OF CSL ORIENTATED GRAINS INCLUDED IN DIVIDED SUB-DOMAIN GROUP II % | SECONDARY RECRYSTALLIZED GRAIN SIZE mm | MAGNETIC FLUX DENSITY $B_8$ T | IRON LOSS W17/50 W/kg | |
| 64 | T | 1.76 | 8.3 | 21.4 | 23 | 1.953 | 0.673 | INVENTIVE EXAMPLE |
| 65 | U | 1.74 | 8.4 | 21.1 | 23 | 1.950 | 0.687 | INVENTIVE EXAMPLE |
| 66 | V | 1.74 | 8.4 | 21.3 | 23 | 1.951 | 0.680 | INVENTIVE EXAMPLE |
| 67 | W | 1.77 | 8.5 | 21.2 | 22 | 1.952 | 0.677 | INVENTIVE EXAMPLE |
| 68 | X | 1.76 | 8.5 | 21.5 | 23 | 1.953 | 0.674 | INVENTIVE EXAMPLE |
| 69 | Y | 1.79 | 8.6 | 22.0 | 25 | 1.966 | 0.620 | INVENTIVE EXAMPLE |
| 70 | Z | 1.74 | 8.4 | 20.6 | 22 | 1.946 | 0.666 | INVENTIVE EXAMPLE |
| 71 | A | 1.72 | 12.1 | 24.4 | 20 | 1.954 | 0.689 | INVENTIVE EXAMPLE |
| 72 | A | 1.85 | 12.0 | 24.4 | 17 | 1.956 | 0.674 | INVENTIVE EXAMPLE |
| 73 | A | 1.97 | 13.3 | 24.4 | 14 | 1.957 | 0.666 | INVENTIVE EXAMPLE |
| 74 | A | 2.23 | 14.9 | 24.4 | 12 | 1.956 | 0.654 | INVENTIVE EXAMPLE |
| 75 | A | 2.08 | 16.5 | 24.4 | 11 | 1.955 | 0.656 | INVENTIVE EXAMPLE |
| 76 | Y | 3.25 | 10.8 | 19.7 | 23 | 1.963 | 0.636 | INVENTIVE EXAMPLE |
| 77 | Y | 10.22 | 6.3 | 19.7 | 8 | 1.966 | 0.621 | INVENTIVE EXAMPLE |
| 78 | Y | 25.72 | 3.3 | 19.7 | 4 | 1.967 | 0.611 | INVENTIVE EXAMPLE |
| 79 | Y | 38.08 | 2.4 | 19.7 | 2 | 1.957 | 0.636 | INVENTIVE EXAMPLE |
| 80 | Y | 62.04 | 1.6 | 19.7 | 1 | 1.906 | 0.816 | COMPARATIVE EXAMPLE |
| 81 | Z | 1.88 | 13.2 | 22.8 | 17 | 1.948 | 0.674 | INVENTIVE EXAMPLE |
| 82 | Z | 1.91 | 13.8 | 22.8 | 18 | 1.950 | 0.669 | INVENTIVE EXAMPLE |
| 83 | Z | 1.98 | 14.3 | 22.8 | 22 | 1.957 | 0.651 | INVENTIVE EXAMPLE |
| 84 | Z | 2.01 | 14.9 | 22.8 | 24 | 1.959 | 0.646 | INVENTIVE EXAMPLE |

[Table 11]

| STEEL TYPE | EVALUATION RESULTS | | | | | | | | | | | | | | | | | | | |
|---|---|---|---|---|---|---|---|---|---|---|---|---|---|---|---|---|---|---|---|---|
| | CHEMICAL COMPOSITION OF BASE STEEL SHEET OF GRAIN ORIENTED ELECTRICAL STEEL SHEET (IN UNITS OF mass%. BALANCE: Fe AND IMPURITIES) | | | | | | | | | | | | | | | | | | | |
| | C | Si | Mn | S | Se | Al | N | Nb | V | Mo | Ta | W | Cu | Bi | B | P | Ti | Sn | Sb | Cr | Ni |
| A | 0.001 | 3.30 | 0.10 | <0.002 | — | <0.004 | <0.002 | — | — | — | — | — | — | — | — | — | — | — | — | — | — |
| B | 0.001 | 3.30 | 0.10 | <0.002 | — | <0.004 | <0.002 | 0.005 | — | — | — | — | — | — | — | — | — | — | — | — | — |
| C | 0.001 | 3.30 | 0.12 | <0.002 | — | <0.004 | <0.002 | — | — | — | — | — | — | — | — | — | — | — | — | — | — |
| D | 0.001 | 3.30 | 0.08 | <0.002 | — | <0.004 | <0.002 | — | — | — | — | — | — | — | — | — | — | — | — | — | — |
| E | 0.001 | 3.30 | 0.10 | <0.002 | — | <0.004 | <0.002 | 0.001 | — | — | — | — | — | — | — | — | — | — | — | — | — |
| F | 0.001 | 3.30 | 0.10 | <0.002 | — | <0.004 | <0.002 | 0.003 | — | — | — | — | — | — | — | — | — | — | — | — | — |
| G | 0.001 | 3.30 | 0.10 | <0.002 | — | <0.004 | <0.002 | 0.010 | — | — | — | — | — | — | — | — | — | — | — | — | — |
| H | 0.001 | 3.30 | 0.10 | <0.002 | — | <0.004 | <0.002 | 0.020 | — | — | — | — | — | — | — | — | — | — | — | — | — |
| I | 0.001 | 3.30 | 0.10 | <0.002 | — | <0.004 | <0.002 | 0.030 | — | — | — | — | — | — | — | — | — | — | — | — | — |
| J | 0.001 | 3.30 | 0.10 | <0.002 | — | <0.004 | <0.002 | 0.050 | — | — | — | — | — | — | — | — | — | — | — | — | — |
| K | 0.001 | 3.30 | 0.10 | <0.002 | 0.001 | <0.004 | <0.002 | 0.005 | — | — | — | — | — | — | — | — | — | — | — | — | — |
| L | 0.001 | 3.30 | 0.10 | <0.002 | — | <0.004 | <0.002 | — | 0.007 | — | — | — | — | — | — | — | — | — | — | — | — |
| M | 0.001 | 3.30 | 0.10 | <0.002 | — | <0.004 | <0.002 | — | — | 0.020 | — | — | — | — | — | — | — | — | — | — | — |
| N | 0.001 | 3.30 | 0.10 | <0.002 | — | <0.004 | <0.002 | — | — | — | 0.003 | — | — | — | — | — | — | — | — | — | — |
| O | 0.001 | 3.30 | 0.10 | <0.002 | — | <0.004 | <0.002 | — | — | — | — | 0.010 | — | — | — | — | — | — | — | — | — |
| P | 0.001 | 3.20 | 0.10 | <0.002 | — | <0.004 | <0.002 | 0.005 | 0.003 | — | 0.003 | — | — | — | — | — | — | — | — | — | — |
| Q | 0.001 | 3.20 | 0.10 | <0.002 | — | <0.004 | <0.002 | 0.005 | — | — | — | — | 0.07 | — | — | — | — | — | — | — | — |
| R | 0.001 | 3.20 | 0.10 | <0.002 | — | <0.004 | <0.002 | 0.005 | — | — | — | — | 0.07 | 0.002 | — | — | — | — | — | — | — |
| S | 0.001 | 3.20 | 0.10 | <0.002 | — | <0.004 | <0.002 | 0.005 | — | — | — | — | 0.02 | — | 0.002 | — | — | — | — | — | — |
| T | 0.001 | 3.20 | 0.10 | <0.002 | — | <0.004 | <0.002 | 0.005 | — | — | — | — | 0.02 | — | — | 0.015 | — | — | — | — | — |
| U | 0.001 | 3.20 | 0.10 | <0.002 | — | <0.004 | <0.002 | 0.005 | — | — | — | — | 0.02 | — | — | — | 0.006 | — | — | — | — |
| V | 0.001 | 3.20 | 0.10 | <0.002 | — | <0.004 | <0.002 | 0.005 | — | — | — | — | 0.02 | — | — | — | — | 0.060 | — | — | — |
| W | 0.001 | 3.20 | 0.10 | <0.002 | — | <0.004 | <0.002 | 0.005 | — | — | — | — | 0.02 | — | — | — | — | — | 0.023 | — | — |
| X | 0.001 | 3.20 | 0.10 | <0.002 | — | <0.004 | <0.002 | 0.005 | — | — | — | — | 0.02 | — | — | — | — | — | — | 0.120 | — |
| Y | 0.001 | 3.45 | 0.10 | <0.002 | — | <0.004 | <0.002 | 0.005 | — | — | — | — | 0.20 | — | — | 0.021 | 0.002 | 0.060 | — | 0.100 | 0.030 |
| Z | 0.001 | 3.40 | 0.10 | <0.002 | — | <0.004 | <0.002 | — | — | — | — | — | 0.20 | — | — | — | — | — | — | — | — |

INDUSTRIAL APPLICABILITY

According to the above aspects of the present invention, it is possible to provide a decarburization-annealed steel sheet for a grain oriented electrical steel sheet capable of increasing a magnetic flux density while suppressing coarsening of a secondary recrystallized grain size. Accordingly, the present invention has significant industrial applicability.

REFERENCE SIGNS LIST

1 Steel sheet
2 Local heating affected region
3 Local heating non-affected region (matrix region)
4 Locally heated region boundary
5 Local heating affected region boundary
14 Goss-oriented grain
15 Coarse Goss-oriented grain
21 Rolling direction
22 Width direction (transverse direction)

**Claims**

1. A decarburization-annealed steel sheet for a grain oriented electrical steel sheet,

   wherein: when a region of at least 100 mm $\times$ 100 mm on a sheet surface is defined as a divided domain, and each domain obtained by subdividing the divided domain into regions of 1 mm $\times$ 1 mm is defined as a divided sub-domain; when an average grain size of grains included in the divided domain is defined as aveD in units of $\mu$m; when a number fraction of a number of grains having a grain size of 3.0 $\times$ aveD or more included in one divided sub-domain in a number of grains included in the divided sub-domain is defined as $F_C$, and a number fraction of a number of grains having a grain size of 3.0 $\times$ aveD or more included in the divided domain in a number of grains included in the divided domain is defined as $aveF_C$; and when divided sub-domains in which a value of $F_C \div aveF_C$ is 1.3 or more are collectively defined as a divided sub-domain group I,
   an area fraction of the divided sub-domain group I in an area of the divided domain is 0.05% or more and 50% or less, and
   wherein: when a deviation angle from an ideal Goss orientation based on a rotation axis parallel to a normal direction is defined as $\alpha$; when a deviation angle from the ideal Goss orientation based on a rotation axis parallel to a transverse direction is defined as $\beta$; when a deviation angle of a crystal orientation measured at a measurement point on the sheet surface is represented as ($\alpha$ $\beta$); when an angular deviation at the measurement point is defined as $\phi = (\alpha^2 + \beta^2)^{1/2}$; when a grain having the angular deviation $\phi$ of 10° or less is defined as a Goss-oriented grain; and when an area fraction of Goss-oriented grains included in the divided sub-domain group I in an area of the divided sub-domain group I is defined as $A^I_{GOSS}$ and an area fraction of Goss-oriented grains included in the divided domain in the area of the divided domain is defined as $aveA_{GOSS}$,
   a value of $A^I_{GOSS} \div aveA_{GOSS}$ is 1.3 or more.

2. The decarburization-annealed steel sheet for the grain oriented electrical steel sheet according to claim 1,

   wherein: when a grain having a misorientation of 10° or less from a crystal orientation having a $\Sigma9$ coincidence site lattice relationship with the ideal Goss orientation is defined as a CSL oriented grain; and when divided sub-domains other than the divided sub-domain group I included in the divided domain are collectively defined as a divided sub-domain group II,
   an area fraction of CSL oriented grains included in the divided sub-domain group II in an area of the divided sub-domain group II is 10% or more and 50% or less.

# FIG. 1

# FIG. 2

## INTERNATIONAL SEARCH REPORT

| International application No. |
| --- |
| **PCT/JP2024/023278** |

### A. CLASSIFICATION OF SUBJECT MATTER

*C22C 38/00*(2006.01)i; *C21D 8/12*(2006.01)i; *C22C 38/60*(2006.01)i
FI: C22C38/00 303U; C22C38/60; C21D8/12 B

According to International Patent Classification (IPC) or to both national classification and IPC

### B. FIELDS SEARCHED

Minimum documentation searched (classification system followed by classification symbols)

C22C38/00-38/60; C21D8/12;

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2002-212637 A (NIPPON STEEL CORPORATION) 31 July 2002 (2002-07-31) | 1-2 |
| A | JP 2020-164907 A (JFE STEEL CORPORATION) 08 October 2020 (2020-10-08) | 1-2 |
| A | JP 2001-60505 A (KAWASAKI STEEL CO.) 06 March 2001 (2001-03-06) | 1-2 |
| A | JP 10-183313 A (KAWASAKI STEEL CO.) 14 July 1998 (1998-07-14) | 1-2 |
| A | JP 10-183312 A (KAWASAKI STEEL CO.) 14 July 1998 (1998-07-14) | 1–2 |

☐ Further documents are listed in the continuation of Box C.      ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **04 September 2024** | **17 September 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
**Information on patent family members**

International application No.

**PCT/JP2024/023278**

| Patent document cited in search report | | | Publication date (day/month/year) | Patent family member(s) | | | Publication date (day/month/year) |
|---|---|---|---|---|---|---|---|
| JP | 2002-212637 | A | 31 July 2002 | US | 2002/0038678 | A1 | |
| | | | | EP | 1179603 | A2 | |
| | | | | EP | 2107130 | A1 | |
| | | | | KR | 10-2002-0013442 | A | |
| | | | | CN | 1351186 | A | |
| JP | 2020-164907 | A | 08 October 2020 | (Family: none) | | | |
| JP | 2001-60505 | A | 06 March 2001 | (Family: none) | | | |
| JP | 10-183313 | A | 14 July 1998 | JP | 10-183312 | A | |
| | | | | US | 6083326 | A | |
| | | | | US | 6444050 | B1 | |
| | | | | US | 2003/0121566 | A1 | |
| | | | | EP | 837148 | A2 | |
| | | | | DE | 69706388 | T2 | |
| | | | | BR | 9705106 | A | |
| | | | | CN | 1188811 | A | |
| | | | | KR | 10-1998-0033020 | A | |
| JP | 10-183312 | A | 14 July 1998 | JP | 10-183313 | A | |
| | | | | US | 6083326 | A | |
| | | | | US | 6444050 | B1 | |
| | | | | US | 2003/0121566 | A1 | |
| | | | | EP | 837148 | A2 | |
| | | | | DE | 69706388 | T2 | |
| | | | | BR | 9705106 | A | |
| | | | | CN | 1188811 | A | |
| | | | | KR | 10-1998-0033020 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023106859 A
- JP 2007169762 A
- WO 2012014290 A
- JP 2022161269 A